# EUROPÄISCHE PATENTSCHRIFT

(11) **EP 4 201 792 B1**
(45) Veröffentlichungstag und Bekanntmachung des Hinweises auf die Patenterteilung: **06.08.2025**
(21) Anmeldenummer: 21217427.0
(22) Anmeldetag: 23.12.2021
(51) Int. Cl.: B62D 37/00, B62D 37/02, B62D 35/00

(54) **AERODYNAMIKSYSTEM FÜR EIN FAHRZEUG**
AERODYNAMICS SYSTEM FOR A VEHICLE
SYSTÈME AÉRODYNAMIQUE POUR UN VÉHICULE

(43) Veröffentlichungstag der Anmeldung: 28.06.2023
(73) Patentinhaber: Universität der Bundeswehr München, 85579 Neubiberg (DE)
(72) Erfinder: Dietz, Markus, 83059 Kolbermoor (DE)
(74) Vertreter: Lucke, Andreas

(56) Entgegenhaltungen:
- DE-A1- 102009 014 860
- DE-A1- 102013 020 886
- US-A1- 2010 106 380

## Beschreibung

### GEBIET DER ERFINDUNG

Die vorliegende Erfindung liegt auf dem Gebiet der Fahrzeugtechnik und Aerodynamik. Die Erfindung betrifft ein Aerodynamiksystem für ein Fahrzeug sowie ein Verfahren zur Luftwiderstandsreduktion bei einem Fahrzeug.

### HINTERGRUND

Der Ressourcenverbrauch und die Umweltverträglichkeit haben im Verkehrs- und Mobilitätssektor in den vergangenen Jahren eine immer größer werdende Bedeutung erlangt. Insbesondere bei höheren Geschwindigkeiten, wie beispielsweise auf Autobahnen, geht ein signifikanter Anteil des Kraftstoffverbrauchs von Fahrzeugen auf den Luftwiderstand zurück. Während im Bereich der Personenkraftwagen durch verbesserte Aerodynamik der Fahrzeuge erhebliche Fortschritte erzielt werden konnten, gibt es bei Lastkraftwagen (LKW) weiterhin Verbesserungsbedarf.

Dies ist nicht zuletzt dadurch bedingt, dass betriebliche Aspekte, wie ein möglichst großes nutzbares Ladevolumen sowie eine einfache Be- und Entladbarkeit, der Formgebung in der Praxis enge Grenzen setzen. Aus diesen Gründen weisen LKW in der Regel einen quaderförmigen Laderaum auf, was aus aerodynamischer Sicht jedoch eine denkbar ungünstige Form darstellt. Während an der Fahrerkabine bzw. an der Zugmaschine verschiedene Optimierungen, wie beispielsweise das Anbringen von Windabweisern, vorgenommen werden können, stellt insbesondere das für das Be- und Entladen genutzte Heck ein Problem dar, da sich hier geometriebedingt die Luftströmung ablöst und einen Unterdruck im heckseitigen Windschatten erzeugt. Der Beitrag des Hecks zum Gesamtluftwiderstand eines LKWs ist daher häufig vergleichbar groß wie der von der Fahrerkabine bzw. der Zugmaschine des LKW hervorgerufene Frontalwiderstand und bietet entsprechend großes Potential zur Optimierung und Verringerung des Kraftstoffverbrauchs.

Aus dem Stand der Technik sind verschiedene Lösungen zur Reduktion des Luftwiderstands bei Fahrzeugen bekannt, beispielsweise schwenkbare, heckseitige Luftleitflächen wie in der DE 10 2009 014 860 A1, rotierende Rollen auf einer Dachfläche des LKWs wie in der FR 2 980 155 A1 oder das Absaugen oder Ausblasen von Luft aus/in Grenzschichten wie in der DE 41 20 472 A1. Die US 2010/0106380 A1 offenbart eine Vorrichtung zur Reduktion des Luftwiderstands bei Fahrzeugen, die eine Vielzahl von schwenkbaren Klappen aufweist, welche mittels Gelenken im Bereich der Kanten einer Heckseite des Fahrzeugs angebracht sind und von einem hinter der Heckseite liegenden Windschattenbereich in einen Strömungsbereich verschwenkt werden können. Aus der DE 10 2013 020 886 A1 ist ferner eine Heckspoilereinrichtung für ein Fahrzeug bekannt, die ein Luftleitelement zur Konturverlängerung einer Seitenfläche des Fahrzeugs sowie eine Verstelleinrichtung zum Verstellen des Luftleitelements aufweist, wobei die Verstelleinrichtung dazu eingerichtet ist, zur dichtenden Anlage eines vorderen Endes des Luftleitelements an die Seitenfläche des Fahrzeugs ein Dichtmittel an die Seitenfläche anzupressen Die bekannten Lösungen sind jedoch teilweise in ihrem Anwendungsbereich beschränkt, beispielsweise da eine nachträgliche Integration nicht oder nur schwer möglich ist, und erzielen zudem häufig nur eine vergleichsweise kleine Reduktion des Luftwiderstands.

### ÜBERBLICK

Es ist daher eine Aufgabe der Erfindung, den Luftwiderstand bei einem Lastkraftwagen zu reduzieren, ohne den nutzbaren Laderaum zu verringern und das Be- und Entladen des LKWs zu erschweren.

Diese Aufgabe wird erfindungsgemäß durch ein Aerodynamiksystem für ein Fahrzeug mit den Merkmalen der Ansprüche 1 und 11 sowie ein Verfahren zur Luftwiderstandsreduktion bei einem Fahrzeug mit den Merkmalen des Anspruchs 12 gelöst. Ausgestaltungen der Erfindung sind in den abhängigen Ansprüchen angegeben.

Das erfindungsgemäße Aerodynamiksystem ist zur Verwendung an einem Fahrzeug, insbesondere einem Lastkraftwagen, eingerichtet. Das Aerodynamiksystem umfasst ein Umlenkelement, das sich entlang einer Drehachse erstreckt und um mindestens 360° um die Drehachse rotierbar ist, sowie eine Strömungsklappe, die von einer eingeklappten Stellung in eine ausgeklappte Stellung überführbar ist. Das Umlenkelement ist dazu eingerichtet, an einer Heckseite des Fahrzeugs angebracht zu werden, so dass die Drehachse parallel zu einer Kante der Heckseite verläuft. Das Umlenkelement ist ferner dazu eingerichtet, um die Drehachse zu rotieren während die Strömungsklappe in der ausgeklappten Stellung ist. Die Strömungsklappe ist dazu eingerichtet, an der Heckseite des Fahrzeugs angebracht zu werden, so dass in der ausgeklappten Stellung eine einem Strömungsbereich zugewandte Strömungslenkfläche der Strömungsklappe in Fahrtrichtung hinter dem Umlenkelement angeordnet ist und sich von dem Umlenkelement in einen in Fahrtrichtung hinter der Heckseite liegenden Windschattenbereich hinein erstreckt.

In manchen Ausführungsformen kann das Umlenkelement dazu eingerichtet sein, so an der Heckseite des Fahrzeugs angebracht zu werden, dass das Umlenkelement teilweise über eine an der Kante an die Heckseite angrenzende Seitenfläche des Fahrzeugs hinaus in den Strömungsbereich ragt. In anderen Ausgestaltungen kann das Umlenkelement dazu eingerichtet sein, so an der Heckseite des Fahrzeugs angebracht zu werden, dass das Umlenkelement nicht in den Strömungsbereich hineinragt, sondern zum Beispiel mit der Seitenfläche des Fahrzeugs fluchtend ist. In wiederum anderen Ausführungsformen kann das Umlenkelement dazu eingerichtet sein, so an der Heckseite des Fahrzeugs angebracht zu werden, dass das Umlenkelement nicht in den Strömungsbereich hineinragt und zudem gegenüber der angrenzenden Seitenfläche in eine dem Strömungsbereich abgewandte Richtung "nach innen" versetzt ist, es mit anderen Worten also einen negativen Überstand zur Seitenfläche ausbildet. Das Umlenkelement kann dazu eingerichtet sein, durch die Rotation um die Drehachse einen Impuls und/oder einen Drehimpuls auf Luft in dem Strömungsbereich zu übertragen, insbesondere auf Luft in einer an die Seitenfläche des Fahrzeugs angrenzenden Grenzschicht. Hierzu kann eine Drehrichtung des Umlenkelements um die Drehachse beispielsweise so gewählt werden, dass eine dem Strömungsbereich zugewandte oder in den Strömungsbereich ragende Außenfläche des Umlenkelements sich entgegen der Fahrtrichtung des Fahrzeugs und damit in Richtung einer Luftströmung in dem Strömungsbereich bewegt. Dies kann ein Ablösen der Grenzschicht an der Kante der Heckseite zumindest teilweise verhindern und damit ein Umlenken der Luft um die Kante in den Windschattenbereich hinein erleichtern.

Das Umlenkelement ist dazu eingerichtet, um die Drehachse zu rotieren während die Strömungsklappe in der ausgeklappten Stellung ist. Anders ausgedrückt kann das Umlenkelement unabhängig von der Strömungsklappe um die Drehachse rotiert werden, d.h. eine Rotation des Umlenkelements um die Drehachse ist nicht mit einer Bewegung der Strömungsklappe gekoppelt. Somit kann das Umlenkelement um die Drehachse rotiert werden ohne dass sich die Stellung der Strömungsklappe verändert.

Das Umlenkelement kann sich entlang der Drehachse beispielsweise über eine Länge zwischen 50 cm und 4 m erstrecken. Das Umlenkelement ist bevorzugt ein rotationssymmetrischer Körper, wobei eine Außenfläche des Körpers sich in azimutaler oder Umfangsrichtung um die Drehachse erstrecken kann. Das Umlenkelement kann entlang der Drehachse einen gleichbleibenden oder einen variierenden Querschnitt senkrecht zu der Drehachse aufweisen und kann beispielsweise eine zylinderförmige Rolle oder Walze sein. Die Drehachse ist die mathematische Achse oder Gerade, um die das Umlenkelement rotiert, und muss nicht notwendigerweise eine körperliche mechanische Achse darstellen. Im Folgenden wird die Richtung parallel zu der Drehachse als axiale oder longitudinale Richtung bezeichnet und die Richtung senkrecht zu der Drehachse als radiale oder transversale Richtung. Das Umlenkelement ist um mindestens 360° um die Drehachse rotierbar, d.h. das Umlenkelement ist dazu eingerichtet, mindestens eine vollständige Umdrehung um die Drehachse auszuführen. In einer bevorzugten Ausführungsform ist das Umlenkelement frei rotierbar, so dass das Umlenkelement eine beliebige Anzahl von Umdrehungen um die Drehachse ausführen kann. Das Umlenkelement kann an einem oder bevorzugt an zwei Enden drehbar gelagert sein, beispielsweise in einer entsprechenden Führung oder Lagerung, oder kann auf einer entlang der Drehachse verlaufenden mechanischen Achse drehbar gelagert sein. Bevorzugt umfasst das Aerodynamiksystem einen Rotationsaktuator, der dazu eingerichtet ist, das Umlenkelement um die Drehachse zu rotieren, beispielsweise einen Elektromotor.

Die Außenfläche des Umlenkelements kann eine Strukturierung aufweisen, beispielsweise eine aufgeraute Oberfläche, zum Beispiel um den Impulsübertrag auf die Luft in dem Strömungsbereich zu erhöhen. Alternativ oder zusätzlich können auf der Außenfläche des Umlenkelements eine oder mehrere hervorstehende Strukturen, beispielsweise in Form eines Stegs oder einer Rippe, angeordnet sein, die sich auf der Außenfläche in axialer und/oder azimutaler Richtung erstrecken. In einem Beispiel weist die Außenfläche eine Vielzahl von hervorstehenden Stegen auf, die sich parallel zu der Drehachse oder helix- oder schraubenförmig um die Drehachse erstrecken.

Die Strömungsklappe kann dazu eingerichtet sein, in der ausgeklappten Stellung einen Luftstrom von dem Umlenkelement in den Windschattenbereich zu lenken. So kann beispielsweise ein Unterdruck in dem Windschattenbereich zumindest teilweise kompensiert werden und dadurch der Luftwiderstand des Fahrzeugs verringert werden. Bevorzugt weist die Strömungslenkfläche hierzu in der ausgeklappten Stellung keine, eine konkave oder eine nur geringe konvexe Krümmung auf, um ein Ablösen der Strömung von der Strömungslenkfläche zu vermeiden. Die Strömungslenkfläche kann beispielsweise einen Krümmungsradius von mehr als 0.2 m, vorzugsweise mehr als 1.0 m, in einem Beispiel mehr als 5.0 m aufweisen.

Die Strömungsklappe kann beispielsweise eine ebene oder gekrümmte Platte sein, zum Beispiel eine trapezförmige oder rechteckige Platte, die sich parallel oder im Wesentlichen parallel zu der Drehachse erstreckt, wenn die Strömungsklappe an der Heckseite des Fahrzeugs angebracht ist. Bevorzugt weist die Strömungsklappe entlang der Drehachse die gleiche Länge wie das Umlenkelement auf. Die Länge der Strömungsklappe in longitudinaler Richtung kann beispielsweise zwischen 90% und 110% der Länge des Umlenkelements betragen. Die Strömungsklappe kann ein proximales, dem Umlenkelement zugewandtes Ende aufweisen sowie ein distales, von dem Umlenkelement abgewandtes Ende, wobei die Strömungslenkfläche sich von dem proximalen Ende zu dem distalen Ende der Strömungsklappe erstrecken kann. Die Strömungsklappe kann senkrecht zu der Drehachse beispielsweise einen rechteckigen Querschnitt oder bevorzugt einen sich zu dem distalen Ende hin verjüngenden Querschnitt aufweisen, beispielsweise einen dreieckigen oder trapezförmigen Querschnitt. Eine Breite der Strömungsklappe in transversaler Richtung zwischen dem proximalen und dem distalen Ende kann beispielsweise zwischen 20 cm und 150 cm betragen.

Die Strömungsklappe kann dazu eingerichtet sein, durch eine Rotations- und/oder Translationsbewegung von der eingeklappten Stellung in die ausgeklappte Stellung (und umgekehrt) überführt zu werden. Die Strömungsklappe kann zum Beispiel um eine Schwenkachse von der eingeklappten Stellung in die ausgeklappte Stellung (und umgekehrt) schwenkbar sein. Im Rahmen der vorliegenden Offenbarung kann ein Element beispielsweise als "schwenkbar" bezeichnet werden, wenn es lediglich um weniger als 360°, in manchen Ausführungsformen um höchstens 270° um eine Schwenkachse verschwenkt/gedreht werden kann, während ein Element als "rotierbar" bezeichnet werden kann, wenn es um mindestens 360°, d.h. um mindestens eine vollständige Umdrehung, vorzugsweise um eine Vielzahl von Umdrehungen um eine Drehachse rotiert/gedreht werden kann. Alternativ oder zusätzlich kann die Strömungsklappe aus mehreren gegeneinander beweglichen Segmenten bestehen und beispielsweise von der eingeklappten Stellung in die ausgeklappte Stellung (und umgekehrt) entfaltet werden. Vorzugsweise ist die Strömungsklappe dazu eingerichtet, unabhängig von dem Umlenkelement bewegt zu werden, d.h. eine Bewegung der Strömungsklappe ist nicht mit einer Bewegung des Umlenkelements, insbesondere nicht mit einer Rotation des Umlenkelements, gekoppelt. Beispielsweise kann die Strömungsklappe dazu eingerichtet sein, von der eingeklappten Stellung in die ausgeklappte Stellung überführt zu werden ohne dass das Umlenkelement rotiert wird und/oder ohne dass eine Rotation des Umlenkelements beeinflusst wird. Somit kann beispielsweise das Umlenkelement mit einer konstanten Winkelgeschwindigkeit rotiert werden während die Strömungsklappe von der eingeklappten Stellung in die ausgeklappte Stellung überführt wird oder umgekehrt.

Durch Kombination des rotierenden Umlenkelements und der in Fahrrichtung dahinter angeordneten Strömungsklappe/Strömungslenkfläche kann gegenüber den aus dem Stand der Technik bekannten Vorrichtungen eine besonders starke Reduktion des Luftwiderstands erreicht werden. Dies ist durch eine vorteilhafte Kombination verschiedener, sich gegenseitig verstärkender Effekte bedingt. Durch Rotation des Umlenkelements kann ein linearer Impuls und damit kinetische Energie auf Luft in dem Strömungsbereich übertragen werden. Dadurch kann Luft in der an die Seitenfläche des Fahrzeugs angrenzenden energiearmen Grenzschicht, die sich in unmittelbarer Nähe der Seitenfläche nicht und in den nach außen daran anschließenden Bereichen nur langsam relativ zu dem Fahrzeug bewegt, im Bereich der Kante der Heckseite beschleunigt werden und damit die Fähigkeit des Luftstroms erhöht werden, gekrümmten Oberflächen des Fahrzeugs ohne Strömungsablösung zu folgen. Durch die endliche Eindringtiefe, die das rotierende Umlenkelement in den Strömungsbereich hineinragen kann, kann zudem in manchen Fällen ein Drehimpuls auf die Luft in dem Strömungsbereich übertragen werden und dadurch der Luftstrom zusätzlich um die Kante der Heckseite in Richtung der Strömungslenkfläche umgelenkt werden. Außerdem kann in manchen Ausgestaltungen die Geometrie des Aerodynamiksystems durch Anpassen der Eindringtiefe beispielsweise an eine Dicke der Grenzschicht an der Seitenfläche des Fahrzeugs angepasst werden. Darüber hinaus kann durch geeignete Wahl der Form sowie eines Anstellwinkels der Strömungslenkfläche in der ausgeklappten Stellung zum einen sichergestellt werden, dass die von dem Umlenkelement erzeugte Strömung an der Strömungslenkfläche anliegen bleibt, und zum anderen die Komponente der Kraft, die durch die resultierende Druckerhöhung in der Nähe der Strömungslenkfläche hervorgerufen wird, in Fahrtrichtung erhöht werden. Das System bietet zudem eine Vielzahl verschiedener Optimierungsparameter und ermöglich somit eine dynamische Anpassung an die jeweilige Fahrsituation. Ferner kann das Aerodynamiksystem ohne Weiteres als nachrüstbares System ausgebildet werden, welches nachträglich an bereits im Verkehr befindlichen Fahrzeugen angebracht werden kann.

Wie oben ausgeführt kann das Umlenkelement in manchen Ausgestaltungen teilweise über eine an der Kante an die Heckseite angrenzende Seitenfläche des Fahrzeugs hinaus in den Strömungsbereich ragen. Die Eindringtiefe des Umlenkelements in den Strömungsbereich, d.h. die Länge, um die das Umlenkelement über die an der Kante an die Heckseite angrenzende Seitenfläche hervorsteht, kann beispielsweise zwischen 10% und 50%, in einigen Beispielen zwischen 20% und 40% eines Durchmessers des Umlenkelements senkrecht zu der Drehachse betragen. In manchen Ausgestaltungen kann die Eindringtiefe beispielsweise zwischen 1 cm und 15 cm, in einigen Beispielen zwischen 2 cm und 8 cm betragen.

In einer vorteilhaften Weiterbildung ist das Umlenkelement dazu eingerichtet, senkrecht zu der Drehachse verschoben zu werden, um die Eindringtiefe des Umlenkelements in den Strömungsbereich anzupassen, beispielsweise innerhalb der oben angegebenen Bereiche. Hierzu kann das Aerodynamiksystem zum Beispiel eine oder mehrere Schienen aufweisen, entlang derer das Umlenkelement in der besagten Richtung (also senkrecht zur Drehachse) verschoben werden kann, beispielsweise indem eine Lagerung für das Umlenkelement entlang der Schiene(n) verschoben wird. Alternativ oder zusätzlich kann das Aerodynamiksystem auch ein oder mehrere Stellglieder aufweisen, das bzw. die dazu eingerichtet ist bzw. sind, senkrecht zu der Drehachse bewegt zu werden, um das Umlenkelement in der besagten Richtung (also senkrecht zur Drehachse) zu verschieben. In manchen Ausführungsformen kann das Aerodynamiksystem dazu eingerichtet sein, das Umlenkelement automatisch zu verschieben und hierzu beispielsweise einen oder mehrere Aktuatoren, zum Beispiel einen elektrischen oder hydraulischen Aktuator, aufweisen.

In manchen Ausgestaltungen ist die Strömungsklappe um eine Schwenkachse von der eingeklappten Stellung in die ausgeklappte Stellung (und umgekehrt) schwenkbar. Beispielsweise kann die Strömungsklappe drehbar in einer Führung oder um eine mechanische Achse gelagert sein. In manchen Ausgestaltungen kann die Strömungsklappe ein Scharnier oder ein Gelenk aufweisen, das dazu eingerichtet ist, an der Heckseite des Fahrzeugs angebracht zu werden, so dass die Strömungsklappe um die Schwenkachse schwenkbar ist. Vorzugsweise entspricht die Schwenkachse der Strömungsklappe der Drehachse des Umlenkelements, d.h. die Schwenkachse der Strömungsklappe verläuft entlang der Drehachse des Umlenkelements. Hierdurch kann beispielsweise eine gleichbleibende Orientierung der Strömungslenkfläche, insbesondere eines benachbart zu dem Umlenkelement angeordneten proximalen Bereichs der Strömungslenkfläche, relativ zu der Umfangsrichtung des Umlenkelements während des Verschwenkens gewährleistet werden.

Die Strömungsklappe kann in der eingeklappten Stellung an der oder benachbart zu der Heckseite des Fahrzeugs angeordnet sein, beispielweise so, dass eine der Strömungslenkfläche gegenüberliegende Rückseite der Strömungsklappe der Heckseite zugewandt ist. Bevorzugt ist die Strömungsklappe in der eingeklappten Stellung parallel zu der Heckseite des Fahrzeugs angeordnet. In manchen Ausführungsformen kann eine der Strömungslenkfläche gegenüberliegende Rückseite der Strömungsklappe in der eingeklappten Stellung an der Heckseite anliegen oder von dieser durch einen schmalen Spalt beabstandet sein. Hierdurch kann eine platzsparende Anordnung der Strömungsklappe erreicht werden, so dass die Strömungsklappe beim Rangieren und/oder beim Be- und Entladen des Fahrzeugs nicht stört. Die Rückseite der Strömungsklappe kann als eine durchgehende Fläche ausgebildet sein, beispielsweise ähnlich der Strömungslenkfläche, oder kann ganz oder teilweise offen oder ausgespart sein. Die Strömungsklappe kann beispielsweise eine oder mehrere Stützrippen aufweisen, an denen die Strömungslenkfläche befestigt ist, zum Beispiel durch Aufnieten eines Blechs. Die der Strömungsfläche gegenüberliegende Rückseite der Stützrippenkonstruktion kann in manchen Beispielen offen sein, d.h. auf der Rückseite kann keine Abdeckung an den Stützrippen befestigt sein.

Die Strömungslenkfläche kann in der ausgeklappten Stellung an das Umlenkelement angrenzen, beispielsweise so, dass ein Abstand zwischen der Strömungslenkfläche und dem Umlenkelement kleiner als 10 cm, bevorzugt kleiner als 5 cm ist. In einer vorteilhaften Weiterbildung des Aerodynamiksystems grenzt die Strömungslenkfläche in der ausgeklappten Stellung tangential an einen Außenumfang des Umlenkelements an. Der proximale Bereich der Strömungslenkfläche kann sich beispielsweise entlang einer Tangente an die Außenfläche des Umlenkelements erstrecken. Dies kann zum Beispiel vorteilhaft sein, um Verwirbelungen und/oder ein Ablösen der Strömung im Übergangsbereich zwischen dem Umlenkelement und der Strömungslenkfläche zu vermeiden.

Die Strömungslenkfläche kann in der ausgeklappten Stellung unter einem Anstellwinkel zwischen 10° und 80°, in manchen Beispielen zwischen 20° und 60°, vorzugsweise zwischen 30° und 50° von der Heckseite verlaufen. Der Anstellwinkel kann beispielsweise der Winkel sein, der von einer das proximale und das distale Ende der Strömungslenkfläche verbindenden Ebene oder von einer Tangentialebene der Strömungslenkfläche mit der Heckseite des Fahrzeugs eingeschlossen wird. Bevorzugt ist das Aerodynamiksystem dazu eingerichtet, den Anstellwinkel in der ausgeklappten Stellung anzupassen, zum Beispiel mittels eines Stellaktuators wie unten beschrieben.

In einigen Ausgestaltungen kann die Strömungslenkfläche mehrere Abschnitte in longitudinaler und/oder transversaler Richtung aufweisen, die sich beispielsweise in ihrer Krümmung unterscheiden. Die Strömungslenkfläche kann zum Beispiel einen ersten oder proximalen Abschnitt und einen zweiten oder distalen Abschnitt aufweisen, wobei der erste Abschnitt im ausgeklappten Zustand zwischen dem zweiten Abschnitt und dem Umlenkelement angeordnet ist. Dabei kann der erste Abschnitt beispielsweise eine konvexe Krümmung aufweisen, während der zweite Abschnitt keine Krümmung oder eine konkave Krümmung aufweisen kann. Die Krümmung der Strömungslenkfläche kann dabei zum Beispiel in einer Ebene senkrecht zu der Drehachse gemessen werden, d.h. die Krümmung der Strömungslenkfläche in transversaler Richtung beschreiben. Eine solche Ausgestaltung des Strömungslenkfläche kann beispielsweise vorteilhaft sein in Kombination mit einer kleinen Eindringtiefe des Umlenkelements, zum Beispiel einer Eindringtiefe von weniger als 5 cm, in manchen Beispielen weniger als 3 cm, oder in Ausführungsformen, in denen das Umlenkelement nicht in den Strömungsbereich hineinragt. In einer solchen Konfiguration kann das Umlenkelement einen linearen Impuls auf die Luft übertragen und kann der resultierende lineare Luftstrom dann durch den konvexen ersten Abschnitt in den Windschattenbereich umgelenkt werden. In manchen Ausführungsformen können einige oder alle Abschnitte der Strömungslenkfläche durch einen Spalt voneinander beabstandet sein, der sich beispielsweise ganz oder teilweise um die entsprechenden Abschnitte erstrecken kann. In einigen Ausgestaltungen kann der distale Abschnitt der Strömungsklappe einen Luftspalt zum proximalen Abschnitt aufweisen, zum Beispiel so dass durch den Luftspalt energiereiche Strömung auf die Rückseite des distalen Abschnitts gelangt und dort einen Unterdruck erzeugt, ähnlich einer Spaltklappe an einer Tragfläche. In anderen Ausführungsformen kann die Strömungslenkfläche über ihre gesamte Länge senkrecht zu der Drehachse eine konvexe oder bevorzugt eine konkave Krümmung oder keine Krümmung aufweisen, beispielsweise bei Kombination mit einem Umlenkelement mit größerer Eindringtiefe. Parallel zu der Drehachse weist die Strömungslenkfläche bevorzugt keine Krümmung auf. In einigen Ausführungsformen kann die Strömungslenkfläche aber auch in longitudinaler Richtung eine konvexe oder konkave Krümmung aufweisen, insbesondere in Endbereichen in longitudinaler Richtung.

In manchen Ausführungsformen kann die Strömungsklappe mehrere Segmente in longitudinaler und/oder transversaler Richtung aufweisen, die zum Beispiel gegeneinander beweglich sein können. Die Strömungsklappe kann beispielsweise ein erstes oder proximales Segment und ein zweites oder distales Segment aufweisen, wobei das erste Segment zwischen dem zweiten Segment und dem Umlenkelement angeordnet ist. Das erste Segment kann gegenüber dem Umlenkelement verschwenkbar sein und das zweite Segment kann gegenüber dem ersten Segment verschwenkbar sein, beispielsweise so, dass ein Winkel zwischen dem ersten Segment relativ zu dem Umlenkelement und ein Winkel zwischen dem ersten und dem zweiten Segment verändert werden kann. Ein Anstellwinkel des zweiten Segments in der ausgeklappten Stellung kann von einem Anstellwinkel des ersten Segments verschieden sein. Das zweite Segment kann in der ausgeklappten Stellung zum Beispiel einen größeren oder kleineren Anstellwinkel als das erste Segment aufweisen. In manchen Ausführungsformen können einige oder alle Segmente der Strömungsklappe durch einen Spalt voneinander beabstandet sein, der sich beispielsweise ganz oder teilweise um die entsprechenden Segmente erstrecken kann. In einigen Ausgestaltungen kann das distale Segment der Strömungsklappe einen Luftspalt zum proximalen Segment aufweisen, zum Beispiel so dass durch den Luftspalt energiereiche Strömung auf die Rückseite des distalen Segments gelangt und dort einen Unterdruck erzeugt, ähnlich einer Spaltklappe an einer Tragfläche.

In einer vorteilhaften Weiterbildung umfasst das Aerodynamiksystem ferner einen Stellaktuator, der dazu eingerichtet ist, die Strömungsklappe von der eingeklappten Stellung in die ausgeklappte Stellung (und umgekehrt) zu überführen. Der Stellaktuator kann beispielsweise an einer der Strömungslenkfläche gegenüberliegenden Rückseite der Strömungsklappe sowie an der Heckseite des Fahrzeugs befestigt sein oder dazu eingerichtet sein, entsprechend befestigt zu werden. Der Stellaktuator kann ein in seiner Länge veränderbares Stellelement aufweisen, beispielsweise einen aus- bzw. einfahrbaren Kolben. Der Stellaktuator kann ferner einen Motor, zum Beispiel einen elektrischen oder hydraulischen Motor aufweisen, der dazu eingerichtet sein kann, die Länge des Stellelements zu verändern.

In manchen Ausführungsformen kann das Umlenkelement eine Vielzahl von entlang der Drehachse angeordneten Segmenten aufweisen, zum Beispiel zwischen 2 und 20 Segmenten. Die Segmente können jeweils dazu eingerichtet sein, unabhängig von den anderen Segmenten des Umlenkelements und unabhängig von der Strömungsklappe um die Drehachse rotiert zu werden. Jedes der Segmente kann beispielsweise in einer eigenen Führung oder Lagerung drehbar gelagert sein. In einem anderen Beispiel können die Segmente auf einer gemeinsamen Achse drehbar gelagert sein. In einer bevorzugten Ausgestaltung weist das Aerodynamiksystem eine Antriebseinheit auf, die dazu eingerichtet ist, jedes der Segmente unabhängig von den anderen Segmenten anzutreiben. Die Antriebseinheit kann beispielsweise eine Vielzahl von Rotationsaktuatoren aufweisen, zum Beispiel jeweils einen Rotationsaktuator für jedes der Segmente.

In einer vorteilhaften Weiterbildung ist das Aerodynamiksystem ein nachrüstbares Aerodynamiksystem, welches dazu eingerichtet ist, von außen an dem Fahrzeug abnehmbar befestigt zu werden. In anderen Worten kann das Aerodynamiksystem dazu eingerichtet sein, nachträglich an einem bereits fertig hergestellten Fahrzeug angebracht zu werden. Insbesondere ist es hierzu vorzugsweise nicht erforderlich, Karosserieteile des Fahrzeugs abzunehmen oder Modifikationen im Inneren des Fahrzeugs vorzunehmen.

Hierzu kann das Aerodynamiksystem ferner ein Befestigungssystem umfassen, das dazu eingerichtet ist, das Umlenkelement und die Strömungsklappe an der Heckseite des Fahrzeugs zu befestigen. In manchen Ausführungsformen kann das Befestigungssystem ein oder mehrere Verbindungselemente aufweisen, welche das Umlenkelement und die Strömungsklappe miteinander mechanisch verbinden, beispielsweise eine gemeinsame Achse, einen Rahmen oder ein Gestell, an der/dem sowohl das Umlenkelement als auch die Strömungsklappe angebracht sind. Das Befestigungssystem kann ein oder mehrere Befestigungselemente aufweisen, die dazu eingerichtet sind, die Verbindungselemente an der Heckseite zu befestigen, beispielsweise an einer Hecktür des Fahrzeugs. In anderen Ausführungsformen können die Befestigungselemente alternativ oder zusätzlich auch dazu eingerichtet sein, die Strömungsklappe und/oder das Umlenkelement direkt an der Heckseite zu befestigen. Insbesondere kann beispielsweise der Stellaktuator auch als Befestigungselement fungieren. Die Befestigungselemente können zum Beispiel dazu eingerichtet sein, mit dem Fahrzeug und insbesondere einer Hecktür des Fahrzeugs verschraubt, verschweißt und/oder verklebt zu werden und/oder mit einem entsprechenden Gegenstück an dem Fahrzeug formschlüssig ineinander zu greifen.

Vorzugsweise ist das Befestigungssystem dazu eingerichtet, in eine oder mehrere Türscharnieraufnahmen des Fahrzeugs, beispielsweise an einer Hecktür, an der Heckseite und/oder an einer Seitenfläche des Fahrzeugs, eingehängt zu werden, um das Umlenkelement und die Strömungsklappe an der Heckseite anzubringen. Hierzu kann das Befestigungssystem beispielsweise ein oder mehrere Befestigungselemente wie zum Beispiel Beschläge und/oder Scharniere aufweisen, die jeweils dazu eingerichtet sind, in eine Türscharnieraufnahme eingehängt zu werden, beispielsweise anstelle eines Standardscharniers des Fahrzeugs.

In einer vorteilhaften Weiterbildung umfasst das Aerodynamiksystem und insbesondere das Befestigungssystem ein Scharnier, das dazu eingerichtet ist, eine Hecktür des Fahrzeugs schwenkbar an der Heckseite und/oder der Seitenfläche des Fahrzeugs zu befestigen, wobei eine Schwenkachse des Scharniers in Fahrtrichtung hinter dem Umlenkelement und/oder hinter der Strömungsklappe in der eingeklappten Stellung angeordnet ist. Vorzugsweise ist die Schwenkachse des Scharniers so angeordnet, dass die Hecktür zusammen mit der Strömungsklappe um mindestens 180°, bevorzugt um mindestens 250°, in einem Beispiel um 270° verschwenkt werden kann. Das Scharnier kann dazu eingerichtet sein, in eine Türscharnieraufnahme an der Hecktür, an der Heckseite und/oder an der Seitenfläche eingehängt zu werden. Alternativ oder zusätzlich kann das Scharnier auch dazu eingerichtet sein, anderweitig an der Hecktür, an der Heckseite und/oder an der Seitenfläche befestigt zu werden, beispielsweise verschraubt zu werden. Das Scharnier kann ferner dazu eingerichtet sein, mit den Umlenkelement und/oder der Strömungsklappe verbunden zu werden und kann beispielsweise eine entsprechende Führung für das Umlenkelement und/oder die Strömungsklappe aufweisen.

Das Aerodynamiksystem kann ferner dazu eingerichtet sein, mit einem elektrischen Bordnetz und/oder einem Hydrauliksystem in dem Fahrzeug gekoppelt zu werden, zum Beispiel um Energie für das Rotieren des Umlenkelements, das Verstellen der Strömungsklappe und/oder eine elektronische Steuereinheit des Aerodynamiksystems bereitzustellen. Das Aerodynamiksystem kann beispielsweise mittels eines Kabels und/oder einer entsprechenden Zuleitung mit dem Fahrzeug gekoppelt werden. In manchen Ausgestaltungen kann das Aerodynamiksystem etwa einen oder mehrere Rotationsaktuatoren, der/die jeweils dazu eingerichtet ist/sind, das Umlenkelement oder ein Segment des Umlenkelements um die Drehachse zu rotieren, und einen oder mehrere Stellaktuatoren, der/die jeweils dazu eingerichtet ist/sind, die Strömungsklappe oder ein Segment der Strömungsklappe von der eingeklappten Stellung in die ausgeklappte Stellung (und umgekehrt) zu überführen, umfassen. Der Rotationsaktuator und der Stellaktuator können dazu eingerichtet sein, mit einem elektrischen Bordnetz und/oder einem Hydrauliksystem in dem Fahrzeug gekoppelt zu werden. Alternativ oder zusätzlich kann das Aerodynamiksystem auch einen oder mehrere Aktuatoren aufweisen, der/die jeweils dazu eingerichtet sind, das Umlenkelement oder ein Segment des Umlenkelements senkrecht zu der Drehachse zu verschieben, und mit dem elektrischen Bordnetz und/oder dem Hydrauliksystem gekoppelt zu werden.

Es wird weiterhin eine Anordnung zur Verwendung an einem Fahrzeug, insbesondere einem Lastkraftwagen, vorgesehen, die mehrere Aerodynamiksysteme gemäß einer der hierin beschriebenen Ausführungsformen umfasst. Beispielsweise kann die Anordnung ein erstes Aerodynamiksystem umfassen, das dazu eingerichtet ist, entlang einer in Fahrtrichtung gesehen rechten Seitenkante der Heckseite des Fahrzeugs angebracht zu werden; ein zweites Aerodynamiksystem, das dazu eingerichtet ist, entlang einer in Fahrtrichtung gesehen linken Seitenkante der Heckseite angebracht zu werden; und/oder ein drittes Aerodynamiksystem, das dazu eingerichtet ist, entlang einer Oberkante der Heckseite angebracht zu werden.

Das Umlenkelement, die Strömungsklappe sowie weitere Bestandteile des jeweiligen Aerodynamiksystems, insbesondere das Befestigungssystem, sind vorzugsweise an den entsprechenden Anbringungsort angepasst. Beispielsweise kann die Länge des Umlenkelements und/oder die Länge der Strömungsklappe an eine Länge der entsprechenden Kante der Heckseite angepasst sein und beispielsweise zwischen 50% und 120%, in manchen Beispielen zwischen 60% und 100% der Länge der Kante betragen. Die Breite der Strömungsklappe des ersten und/oder zweiten Aerodynamiksystems kann an die Form der Heckseite, insbesondere an eine Breite einer Hecktür angepasst sein und beispielsweise zwischen 20% und 90%, in manchen Beispielen zwischen 30% und 70% der Breite der Hecktür betragen.

Bevorzugt ist die Form der Strömungsklappen so gewählt, dass die Strömungsklappen im eingeklappten Zustand nicht miteinander überlappen und entsprechend unabhängig voneinander zwischen dem eingeklappten und dem ausgeklappten Zustand überführt werden können. Beispielsweise können Oberkanten der Strömungsklappen des ersten und des zweiten Aerodynamiksystems jeweils unter einem Winkel zu der Oberkante der Heckseite verlaufen, zum Beispiel unter einem Winkel zwischen 30° und 60°, bevorzugt zwischen 40° und 50°. Seitenkanten der Strömungsklappe des dritten Aerodynamiksystems können jeweils unter einem Winkel zu der entsprechenden Seitenkante der Heckseite verlaufen, so dass die Strömungsklappe des dritten Aerodynamiksystems im eingeklappten Zustand nicht mit den Strömungsklappen des ersten und des zweiten Aerodynamiksystems überlappt. Hierzu können die Seitenkanten der Strömungsklappen des dritten Aerodynamiksystem beispielsweise unter einem Winkel zu der entsprechenden Seitenkante verlaufen, der so gewählt ist, dass einander zugewandte Seitenkanten der Strömungsklappen der drei Aerodynamiksysteme parallel zueinander verlaufen.

Es wird weiterhin ein Verfahren zur Luftwiderstandsreduktion bei einem Fahrzeug mittels eines Aerodynamiksystems gemäß einer der hierin beschriebenen Ausführungsformen vorgesehen. Das Verfahren umfasst das Ausklappen der Strömungsklappe von der eingeklappten Stellung in die ausgeklappte Stellung und das Rotieren des Umlenkelements um die Drehachse um mindestens eine vollständige Umdrehung während die Strömungsklappe in der ausgeklappten Stellung ist.

Die Strömungsklappe kann beispielsweise manuell oder bevorzugt mittels eines Stellaktuators bis zu einem vorgegebenen Anstellwinkel ausgeklappt werden, beispielsweise einem Anstellwinkel zwischen 20° und 60°. Das Umlenkelement kann zum Beispiel freilaufend gelagert sein und passiv durch den Fahrtwind in eine Drehbewegung versetzt werden. Bevorzugt wird das Umlenkelement aktiv angetrieben, beispielsweise mittels eines Rotationsaktuators wie oben beschrieben. Das Umlenkelement kann insbesondere mit einer vorgegebenen Winkelgeschwindigkeit oder Drehzahl rotiert werden. Die Drehzahl kann beispielsweise zwischen 500 Umdrehungen/min und 5000 Umdrehungen/min betragen und zum Beispiel so gewählt sein, dass eine Umlaufgeschwindigkeit der Außenfläche des Umlenkelement zwischen 20 km/h und 200 km/h beträgt. Eine Drehrichtung des Umlenkelements um die Drehachse ist vorzugsweise so gewählt, dass eine dem Strömungsbereich zugewandte oder in den Strömungsbereich ragende Außenfläche des Umlenkelements sich entgegen der Fahrtrichtung des Fahrzeugs und damit in Richtung einer Luftströmung in dem Strömungsbereich bewegt. Während das Umlenkelement rotiert wird, verbleibt die Strömungsklappe in der ausgeklappten Stellung, d.h. die Strömungsklappe wird zumindest zeitweise nicht bewegt während das Umlenkelement rotiert. Das Umlenkelement wird um mindestens eine vollständige Umdrehung, vorzugsweise um eine Vielzahl vollständiger Umdrehungen rotiert während die Strömungsklappe in der ausgeklappten Stellung verbleibt.

Bevorzugt wird das Aerodynamiksystem abhängig von der Geschwindigkeit des Fahrzeugs aktiviert. Beispielsweise kann die Strömungsklappe von der eingeklappten Stellung in die ausgeklappte Stellung ausgeklappt werden, wenn eine Geschwindigkeit des Fahrzeugs einen ersten Schwellenwert überschreitet. Der erste Schwellenwert kann beispielsweise zwischen 50 km/h und 100 km/h betragen. Alternativ oder zusätzlich kann das Umlenkelement in Bewegung versetzt werden und/oder die Rotation des Umlenkelements angetrieben werden, wenn die Geschwindigkeit einen zweiten Schwellenwert überschreitet. Der zweite Schwellenwert kann beispielsweise zwischen 50 km/h und 100 km/h betragen. Der zweite Schwellenwert kann gleich dem ersten Schwellenwert, größer als der erste Schwellenwert oder kleiner als der erste Schwellenwert sein. Alternativ oder zusätzlich kann das Aerodynamiksystem abhängig von weiteren hinreichenden und/oder notwendigen Bedingungen aktiviert werden, beispielsweise abhängig von der Position des Fahrzeugs, zum Beispiel nur außer Orts, und/oder abhängig von dem befahrenen Streckenabschnitt, zum Beispiel nur auf Autobahnen und/oder Bundesstraßen. In manchen Ausführungsformen kann das Aerodynamiksystem von außen aktiviert werden, beispielsweise manuell von einem Fahrer oder automatisch von einem Steuergerät des Fahrzeugs. In einigen Ausgestaltungen kann das Aerodynamiksystem von außen freigegeben werden, beispielsweise von einem Fahrer oder einem Steuergerät des Fahrzeugs, wobei das Aerodynamiksystem nur dann abhängig von der Geschwindigkeit des Fahrzeugs aktiviert wird, wenn das Aerodynamiksystem zuvor freigegeben wurde, zum Beispiel bei Vorliegen einer der zuvor genannten Bedingungen.

In einer vorteilhaften Weiterbildung werden Parameter des Aerodynamiksystems abhängig von der Geschwindigkeit des Fahrzeugs angepasst. Das Verfahren kann ferner beispielsweise das Anpassen der Winkelgeschwindigkeit des Umlenkelements, der Eindringtiefe des Umlenkelements in den Strömungsbereich und/oder des Anstellwinkels der Strömungslenkfläche in der ausgeklappten Stellung abhängig von der Geschwindigkeit des Fahrzeugs umfassen. Die genannten Parameter, die im Folgenden auch als Systemparameter bezeichnet werden, können beispielsweise mit zunehmender Geschwindigkeit erhöht werden, zum Beispiel linear oder nichtlinear mit der Geschwindigkeit des Fahrzeugs, beispielsweise mittels entsprechender im Voraus bestimmter Kalibrierungskurven.

In manchen Ausführungsformen kann das Verfahren ferner das Einklappen der Strömungsklappe von der ausgeklappten Stellung in die eingeklappte Stellung und/oder das Abbremsen oder Anhalten der Rotation des Umlenkelements umfassen. Dies kann beispielsweise bei einer starken Bremsung des Fahrzeugs erfolgen, um den Luftwiderstand des Fahrzeugs zu erhöhen und damit den Bremsweg des Fahrzeugs zu verringern. Das Einklappen der Strömungsklappe und/oder das Abbremsen oder Anhalten der Rotation des Umlenkelements kann beispielsweise erfolgen, sobald eine Bremsverzögerung des Fahrzeugs einen vorgegebenen Schwellenwert übersteigt, wobei der Schwellenwert zum Beispiel zwischen 0.5 m/s² und 10 m/s², in einem Beispiel zwischen 1 m/s² und 5 m/s² betragen kann. In einigen Ausgestaltungen kann das Verfahren in einem solchen Fall auch das Umkehren der Drehrichtung des Umlenkelements umfassen.

In einigen Ausgestaltungen kann das Verfahren ferner das Anpassen des Anstellwinkels der Strömungslenkfläche in der ausgeklappten Stellung, der Winkelgeschwindigkeit des Umlenkelements und/oder der Eindringtiefe des Umlenkelements an eine Anströmrichtung einer Luftströmung umfassen. Dies kann zum Beispiel vorteilhaft sein, um eine durch einen Seitenwind auf das Fahrzeug ausgeübte Kraft zumindest teilweise zu kompensieren. Die Anströmrichtung kann insbesondere eine Anströmrichtung einer Luftströmung über einer oberen Seitenfläche des Fahrzeugs sein, wobei die obere Seitenfläche beispielsweise an einer Oberkante der Heckseite an die Heckseite angrenzen kann und zum Beispiel eine Dachfläche des Fahrzeugs sein kann. Die Anströmrichtung kann zum Beispiel mittels eines auf der oberen Seitenfläche angeordneten Strömungsrichtungssensors, zum Beispiel eines Schiebewinkelsensors, gemessen werden.

In manchen Beispielen wird das erfindungsgemäße Verfahren mit einer Vielzahl von Aerodynamiksystemen durchgeführt, beispielsweise mit der oben beschriebenen Anordnung von Aerodynamiksystemen. Entsprechend kann das Verfahren das Ausklappen mehrerer Strömungsklappen, insbesondere das gleichzeitige Ausklappen mehrerer Strömungsklappen, sowie das Rotieren mehrerer Umlenkelemente um die jeweilige Drehachse, insbesondere das gleichzeitige Rotieren mehrerer Umlenkelemente, umfassen. In manchen Ausführungsformen kann dabei die gleiche Winkelgeschwindigkeit, die gleiche Eindringtiefe und/oder der gleiche Anstellwinkel für jedes der Aerodynamiksysteme verwendet werden. In anderen Beispielen können unterschiedliche Systemparameter für die verschiedenen Aerodynamiksysteme verwendet werden. Die Systemparameter können wie oben beschrieben angepasst werden, beispielsweise an die Geschwindigkeit des Fahrzeugs.

In einem Beispiel umfasst das Verfahren das Ausklappen einer Strömungsklappe und/oder das Rotieren eines Umlenkelements eines ersten Aerodynamiksystems, das entlang einer in Fahrtrichtung gesehen rechten Seitenkante der Heckseite des Fahrzeugs angebracht ist, sowie das Ausklappen einer Strömungsklappe und/oder das Rotieren eines Umlenkelements eines zweiten Aerodynamiksystems, das entlang einer in Fahrtrichtung gesehen linken Seitenkante der Heckseite des Fahrzeugs angebracht ist.

In einer vorteilhaften Weiterbildung umfasst das Verfahren ferner ein asymmetrisches oder antikorreliertes Anpassen eines oder mehrerer Systemparameter des ersten und des zweiten Aerodynamiksystems an eine Anströmrichtung einer Luftströmung, zum Beispiel ähnlich wie oben beschrieben. Bei dem asymmetrischen Anpassen können die Systemparameter des ersten und des zweiten Aerodynamiksystems in entgegengesetzte Richtungen verändert werden. Beispielsweise kann der Anstellwinkel der Strömungslenkfläche des ersten Aerodynamiksystems erhöht (oder verringert) werden, während der Anstellwinkel der Strömungslenkfläche des zweiten Aerodynamiksystem verringert (oder erhöht) wird. In gleicher Weise können alternativ oder zusätzlich beispielsweise die Winkelgeschwindigkeiten der beiden Umlenkelemente asymmetrisch angepasst werden. Das asymmetrische Anpassen der Systemparameter kann zum Beispiel vorteilhaft sein, um Seitenwindkräfte zumindest teilweise zu kompensieren und/oder eine aktive Fahrdynamikregelung mittels der Aerodynamiksysteme zu implementieren.

Das erfindungsgemäße Aerodynamiksystem kann ferner eine Steuereinheit umfassen, die dazu eingerichtet ist, das Verfahren nach einer der hierin beschriebenen Ausführungsformen ganz oder in Teilen auszuführen. Die Steuereinheit kann als Hardware und/oder Software implementiert sein und kann beispielsweise einen Prozessor sowie ein Speichermedium umfassen, wobei das Speichermedium Instruktionen zur Ausführung durch den Prozessor speichert, um die hier beschriebene Funktionalität bereitzustellen und insbesondere die entsprechenden Verfahrensschritte auszuführen. Alternativ oder zusätzlich kann die Steuereinheit hierzu weitere analoge und/oder digitale elektronische Schaltungen und/oder hydraulische Schaltungen aufweisen. Die Steuereinheit kann dazu eingerichtet sein, Aktuatoren des Aerodynamiksystems anzusteuern, zum Beispiel um die Strömungsklappe auszuklappen, das Umlenkelement in Bewegung zu versetzen und/oder Systemparameter des Aerodynamiksystems anzupassen. Die Steuereinheit kann mit einem oder mehreren Sensoren gekoppelt sein oder diese umfassen, beispielsweise einen Geschwindigkeitssensor, der dazu eingerichtet ist, eine Geschwindigkeit des Fahrzeugs zu bestimmen, einen Beschleunigungssensor, der dazu eingerichtet ist, eine Beschleunigung des Fahrzeugs zu bestimmen, einen Positionssensor, der dazu eingerichtet ist, eine Position des Fahrzeugs zu bestimmen, und/oder einen Strömungssensor, der dazu eingerichtet ist, eine Anströmrichtung und/oder Anströmgeschwindigkeit einer Luftströmung zu bestimmen.

Die Steuereinheit weist vorzugsweise ein Kommunikationsmodul auf, welches dazu eingerichtet ist, mittels einer kabelgebundenen und/oder bevorzugt einer drahtlosen Kommunikationsschnittstelle Daten mit einem Steuergerät des Fahrzeugs auszutauschen. Die Steuereinheit kann beispielsweise dazu eingerichtet sein, Befehle zum Freigeben des Aerodynamiksystems, zum Aus- oder Einklappen der Strömungsklappen, zum Antreiben des Umlenkelements und/oder zum Anpassen von Parametern des Aerodynamiksystems von dem Steuergerät des Fahrzeugs zu empfangen. Die Steuereinheit kann ferner dazu eingerichtet sein, einen Status oder eine Stellung des Aerodynamiksystems sowie Systemparameter des Aerodynamiksystems an das Steuergerät zu übermitteln und/oder Messwerte wie beispielsweise die Fahrzeuggeschwindigkeit, die Fahrzeugposition, und/oder eine Anströmrichtung einer Luftströmung von dem Steuergerät zu empfangen.

### KURZE BESCHREIBUNG DER FIGUREN

Die Erfindung wird im Folgenden anhand von Ausführungsbeispielen mit Bezug auf die beigefügten Zeichnungen näher erläutert. In den Figuren zeigen in schematischer Darstellung:
Fig. 1a: ein Fahrzeug gemäß einem Beispiel in Draufsicht;
Fig. 1b: das Fahrzeug aus Fig. 1a in einer Seitenansicht;
Fig. 2: ein Aerodynamiksystem für ein Fahrzeug gemäß einer beispielhaften Ausführungsform der Erfindung in Draufsicht;
Fig. 3a: eine Anordnung zur Verwendung an einem Fahrzeug gemäß einer beispielhaften Ausführungsform der Erfindung in Draufsicht;
Fig. 3b: die Anordnung aus Fig. 3a in einer Seitenansicht;
Fig. 3c: die Anordnung aus Fig. 3a in einer perspektivischen Ansicht;
Fig. 3d: die Anordnung aus Fig. 3a in einer Rückansicht;
Fig. 4a: ein Aerodynamiksystem mit einer konkaven Strömungslenkfläche gemäß einer beispielhaften Ausführungsform der Erfindung;
Fig. 4b: ein Aerodynamiksystem mit einer Strömungslenkfläche mit zwei Abschnitten gemäß einer beispielhaften Ausführungsform der Erfindung;
Fig. 4c: ein Aerodynamiksystem mit einer Strömungsklappe mit zwei Segmenten gemäß einer beispielhaften Ausführungsform der Erfindung;
Fig. 5: ein Flussdiagramm eines Verfahrens zur Luftwiderstandsreduktion bei einem Fahrzeug gemäß einer beispielshaften Ausführungsform der Erfindung;
Fig. 6a: ein Aerodynamiksystem mit einer Strömungslenkfläche mit einem Spalt gemäß einer beispielhaften Ausführungsform der Erfindung;
Fig. 6b: ein Aerodynamiksystem mit einer Strömungslenkfläche mit zwei Spalten gemäß einer beispielhaften Ausführungsform der Erfindung;
Fig. 6c: ein Aerodynamiksystem mit einer von dem Umlenkelement beabstandeten Strömungslenkfläche gemäß einer beispielhaften Ausführungsform der Erfindung;
Fig. 7a: ein mittels eines Befestigungssystems an einer Hecktür angebrachtes Aerodynamiksystem bei geschlossener Hecktür gemäß einer beispielhaften Ausführungsform der Erfindung in Draufsicht;
Fig. 7b: das Aerodynamiksystem aus Fig. 7a bei geöffneter Hecktür in Draufsicht; und
Fig. 7c: das Aerodynamiksystem auf Fig. 7a bei geschlossener Hecktür in einer Seitenansicht.

### BESCHREIBUNG DER FIGUREN

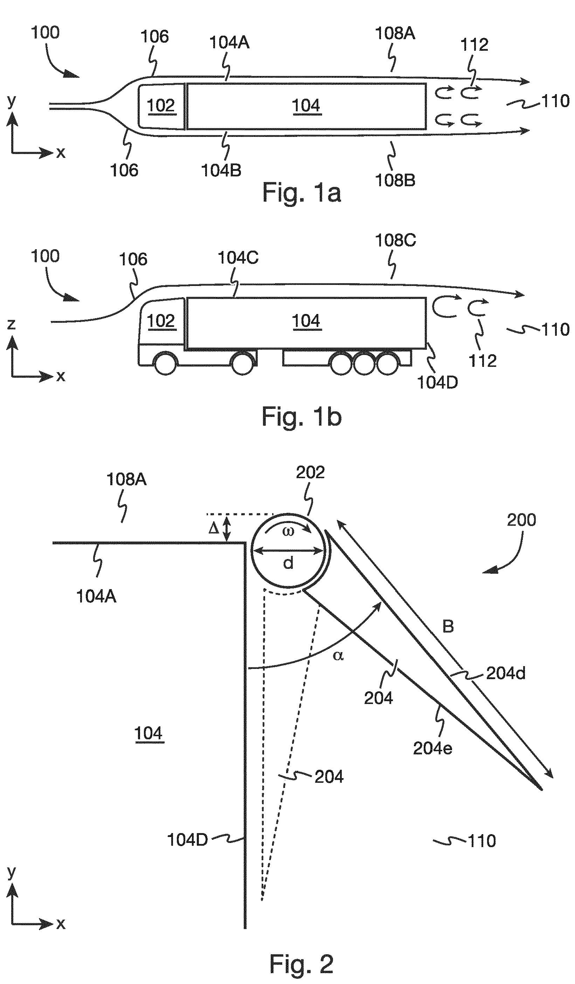

Fig. 1a und 1b zeigen eine schematische Darstellung eines Fahrzeugs 100 in Draufsicht bzw. in einer Seitenansicht. Im Beispiel der Fig. 1a, 1b ist das Fahrzeug 100 ein Lastkraftwagen (LKW) und insbesondere ein Sattelzug. Der LKW 100 umfasst eine Zugmaschine 102 mit einem Fahrerhaus und einem Motor sowie einen Anhänger oder Auflieger 104, der von der Zugmaschine 102 gezogen wird. Der Auflieger 104 weist einen quaderförmigen Laderaum auf mit zwei seitlichen Seitenflächen 104A, 104B, einer oberen Seitenfläche 104C und einer Heckseite 104D.

Wird der LKW 100 in Bewegung versetzt, bildet sich im Bezugssystem des LKWs 100 eine Luftströmung 106, die entgegen der Fahrrichtung des LKWs 100 entlang der Außenflächen des LKWs 100 verläuft, wobei die Fahrtrichtung im Beispiel der Fig. 1a, 1b entgegen der x-Achse zeigt. Die Luftströmung 106 folgt im Wesentlichen den Seitenflächen 104A-C des LKWs 100 und verläuft durch an die Seitenflächen 104A-C angrenzende Strömungsbereiche 108A-C, ehe die Luftströmung 106 sich im Bereich der Kanten zwischen den Seitenflächen 104A-C und der Heckseite 104D von dem LKW 100 ablöst. Hierdurch wird in einem in Fahrtrichtung hinter der Heckseite 104D liegenden Windschattenbereich 110 ein Unterdruck erzeugt, der eine den LKW 100 bremsende Kraft entgegen der Fahrtrichtung hervorruft. Ferner treten Verwirbelungen 112 auf, die zu weiteren Energieverlusten führen. Die auf den Luftwiderstand zurückzuführende Verlustleistung kann erheblich sein und bei einer Geschwindigkeit von 100 km/h beispielsweise etwa 60-90% der Gesamtverlustleistung des LKWs 100 betragen.

Fig. 2 zeigt eine schematische Darstellung eines Aerodynamiksystems 200 für ein Fahrzeug gemäß einer beispielshaften Ausführungsform der Erfindung in Draufsicht. Im Beispiel der Fig. 2 ist das Aerodynamiksystem 200 an dem LKW 100 angebracht und zwar entlang einer in Fahrtrichtung gesehen rechten Seitenkante der Heckseite 104D, die sich entlang der Blickrichtung in Fig. 2 erstreckt.

Das Aerodynamiksystem 200 umfasst ein Umlenkelement 202, das sich entlang einer Drehachse (nicht gezeigt) parallel zu der rechten Seitenkante der Heckseite 104D erstreckt und um die Drehachse rotierbar ist, beispielsweise mit einer Winkelgeschwindigkeit co. Das Umlenkelement 202 ist frei um die Drehachse rotierbar, so dass das Umlenkelement 202 eine beliebige Anzahl von vollständigen Umdrehungen um die Drehachse ausführen kann. Im Beispiel der Fig. 2 ist das Umlenkelement 202 eine zylindrische Rolle oder Walze, die beispielsweise aus Metall, Kunststoff und/oder Hartgummi ausgebildet sein kann. Das Umlenkelement 202 kann zum Beispiel ein dünnwandiges Aluminiumrohr sein. Ein Durchmesser d des Umlenkelements 202 senkrecht zu der Drehachse kann zum Beispiel zwischen 5 cm und 30 cm, bevorzugt zwischen 10 cm und 20 cm betragen. Eine Länge des Umlenkelements 202 kann zwischen 50 cm und 4 m betragen und ist vorzugsweise an die Länge der Seitenkante der Heckseite 104D angepasst, beispielsweise so, dass die Länge des Umlenkelements 202 der Länge der Seitenkante entspricht oder geringfügig kürzer als die Seitenkante ist, beispielsweise zwischen 10 cm und 50 cm kürzer als die Seitenkante.

Das Umlenkelement 202 ist im Beispiel der Fig. 2 so an der Heckseite 104D angebracht, dass das Umlenkelement 202 teilweise über die Seitenkante zwischen der Heckseite 104D und der rechten Seitenfläche 104A hinaus in den Strömungsbereich 108A neben der rechten Seitenfläche 104A des Aufliegers 104 hineinragt. Die Eindringtiefe Δ des Umlenkelements 202 kann beispielsweise zwischen 10% und 50% des Durchmessers d betragen. In anderen Ausgestaltungen kann das Umlenkelement so an der Heckseite 104A angebracht sein, dass das Umlenkelement 202 nicht in den Strömungsbereich 108A hineinragt, sondern zum Beispiel mit der Seitenfläche 104A fluchtend angeordnet ist. In manchen Ausführungsformen kann das Umlenkelement 202 verschiebbar an der Heckseite 104D angebracht sein, so dass das Umlenkelement 202 senkrecht zu der Drehachse verschoben werden kann, um die Eindringtiefe Δ anzupassen.

Das Aerodynamiksystem 200 umfasst ferner eine Strömungsklappe 204, die ebenfalls an der Heckseite 104D angebracht ist und von einer eingeklappten Stellung (gestrichelte Linien) in eine ausgeklappte Stellung (durchgezogene Linien) überführbar ist. Hierzu kann die Strömungsklappe 204 um eine mit der Drehachse des Umlenkelements 202 zusammenfallende Schwenkachse verschwenkt werden. Die Strömungsklappe 204 weist einen näherungsweise dreieckigen Querschnitt auf mit einer von der Heckseite 104D abgewandten Strömungslenkfläche 204d und einer der Heckseite 104D zugewandten Rückseite 204e. Eine dem Umlenkelement 202 zugewandte proximale Seite des Strömungsklappe 204 weist eine kreissegmentförmige Aussparung auf, in der das Umlenkelement 202 teilweise angeordnet ist. Die Länge der Strömungsklappe 204 parallel zu der Seitenkante der Heckseite 104D entspricht dabei vorzugsweise der Länge des Umlenkelements 202. Die Strömungsklappe kann beispielsweise aus Metall und/oder Kunststoff ausgebildet sein, zum Beispiel aus Blech und/oder faserverstärktem Kunststoff. Das Umlenkelement 202 und die Strömungsklappe 204 können unabhängig voneinander bewegt werden. Beispielsweise kann das Umlenkelement 202 rotiert werden ohne eine Stellung der Strömungsklappe 204 zu verändern, zum Beispiel während die Strömungsklappe 204 in der eingeklappten oder ausgeklappten Stellung verbleibt. Umgekehrt kann die Strömungsklappe 204 von der eingeklappten Stellung in die ausgeklappte Stellung überführt werden ohne das Umlenkelement 202 um die Drehachse zu rotieren.

In der eingeklappten Stellung ist die Strömungsklappe 204 an der Heckseite 104D angeordnet, wobei die Rückseite 204e parallel zu der Heckseite 104D verläuft und von dieser durch einen Spalt beabstandet ist. Die Breite B der Strömungsklappe 204 von dem an die Umlenkrolle 202 angrenzenden proximalen Ende bis zu dem von der Umlenkrolle 202 abgewandten distalen Ende beträgt vorzugsweise weniger als die Hälfte der Breite des Aufliegers 104, beispielsweise so, dass die Breite B der Strömungsklappe 204 geringfügig kleiner als die Breite einer Hecktür (nicht gezeigt) des Aufliegers 104 ist, beispielsweise zwischen 10 cm und 50 cm kleiner als die Hecktür.

In der ausgeklappten Stellung ist die Strömungslenkfläche 204d in Fahrtrichtung hinter dem Umlenkelement 202 angeordnet, d.h. zumindest das von dem Umlenkelement 202 abgewandte distale Ende der Strömungslenkfläche 204d befindet sich hinter dem hinteren Rand des Umlenkelements 202. Die Strömungslenkfläche 204d erstreckt sich unter einem Anstellwinkel α gegenüber der Heckseite 104D von dem Umlenkelement 202 weg in den Windschattenbereich 110, so dass die Strömungslenkfläche 204d dem Strömungsbereich 108A zugewandt ist. Der Anstellwinkel α kann beispielsweise zwischen 20° und 60°, vorzugsweise zwischen 30° und 50° betragen. Das proximale Ende der Strömungslenkfläche 204d grenzt tangential an den Außenumfang des Umlenkelements 202 an, so dass ein kontinuierlicher Übergang zwischen dem Umlenkelement 202 und der Strömungslenkfläche 204d entsteht, um Luftverwirbelungen in diesem Bereich zu vermeiden.

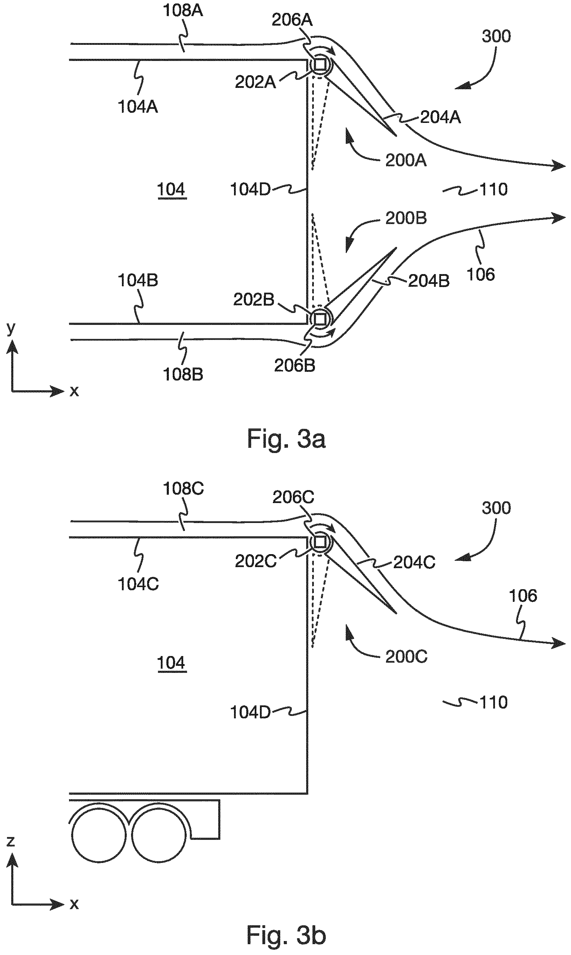

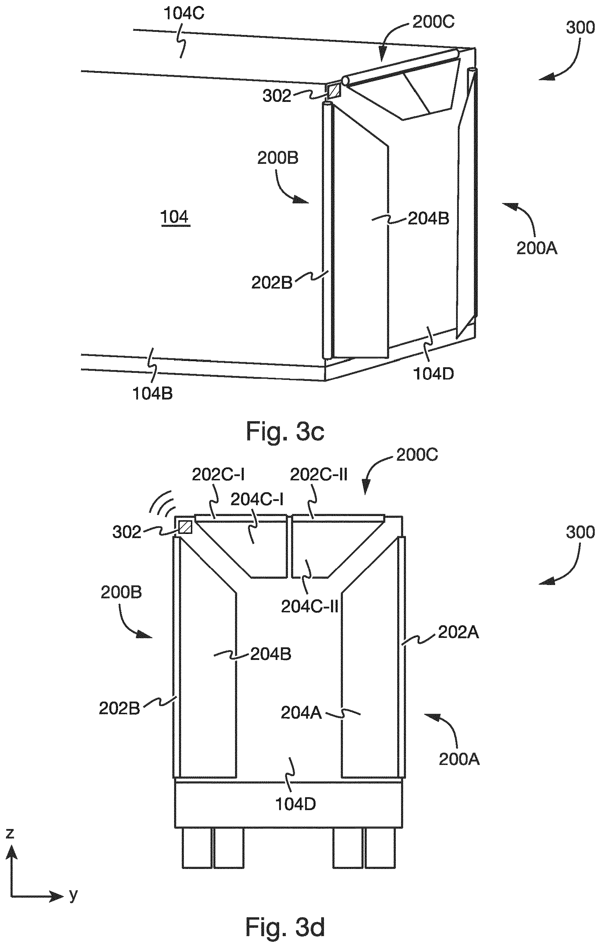

Fig. 3a-d zeigen schematische Darstellungen einer Anordnung 300 zur Verwendung an einem Fahrzeug gemäß einer beispielhaften Ausführungsform der Erfindung. Im Beispiel der Fig. 3a-d ist die Anordnung 300 an dem Auflieger 104 des LKWs 100 angebracht. Die Anordnung 300 ist dabei in Fig. 3a in Draufsicht entlang der z-Achse, in Fig. 3b in einer Seitenansicht entlang der y-Achse, in Fig. 3c in einer perspektivischen Ansicht und in Fig. 3d in einer Rückansicht entlang der x-Achse dargestellt. Die Strömungsklappen 204A-C sind in den Fig. 3a-c in der ausgeklappten Stellung gezeigt und in Fig. 3d in der eingeklappten Stellung. Zur Vereinfachung der Darstellung sind in den Fig. 3a und 3b die Aerodynamiksysteme 200C bzw. 200A, 200B nicht dargestellt.

Die Anordnung 300 umfasst drei Aerodynamiksysteme 200A-C, wobei ein erstes Aerodynamiksystem 200A entlang einer in Fahrtrichtung gesehen rechten Seitenkante der Heckseite 104D des LKWs 100 angebracht ist, ein zweites Aerodynamiksystem 200B entlang einer in Fahrtrichtung gesehen linken Seitenkante der Heckseite 104D des LKWs 100 angebracht ist und ein drittes Aerodynamiksystem 200C entlang einer Oberkante der Heckseite 104D des LKWs 100 angebracht ist. Jedes der Aerodynamiksysteme 200A-C ist ähnlich dem Aerodynamiksystem 200 aus Fig. 2 ausgebildet und umfasst ein drehbar gelagertes Umlenkelement 202A-C sowie eine schwenkbare Strömungsklappe 204A-C. Weiterhin umfasst jedes der Aerodynamiksysteme 200A-C einen Rotationsaktuator 206A-C, zum Beispiel in Form eines Elektromotors, wobei der Rotationsaktuator 206A-C dazu eingerichtet ist, das entsprechende Umlenkelement 202A-C um die entsprechende Drehachse zu rotieren.

In manchen Ausführungsformen kann eines oder mehrere der Umlenkelemente 202A-C eine Vielzahl von entlang der entsprechenden Drehachse angeordneten Segmenten aufweisen, die jeweils dazu eingerichtet sind, unabhängig von den anderen Segmenten des entsprechenden Umlenkelements 202A-C um die Drehachse rotiert zu werden. Hierzu können die entsprechenden Aerodynamiksysteme 200A-C beispielsweise je einen eigenen Rotationsaktuator für jedes der Segmente aufweisen. Alternativ oder zusätzlich kann eine oder mehrere der Strömungsklappen 2o4A-C eine Vielzahl von entlang der entsprechenden Drehachse angeordneten Segmenten aufweisen, die jeweils dazu eingerichtet sind, unabhängig von den anderen Segmenten der entsprechenden Strömungsklappe 204A-C zwischen der eingeklappten Stellung und der ausgeklappten Stellung (und umgekehrt) überführt zu werden.

Im Beispiel der Fig. 3a-d sind das Umlenkelement 202C und die Strömungsklappe 204C des entlang der Oberkante der Heckseite 104D angebrachten Aerodynamiksystems 200C jeweils in zwei durch einen Spalt voneinander beabstandete Segmente 202C-I, 202C-II bzw. 204C-I, 204C-II unterteilt. Dies kann beispielsweise vorteilhaft sein, um seitlich öffnende Hecktüren (nicht gezeigt) des Aufliegers 104 öffnen und schließen zu können, ohne das Aerodynamiksystem 200C abnehmen zu müssen.

Durch die Rotation der Umlenkelemente 202A-C und die Strömungslenkflächen der Strömungsklappen 204A-C wird die Luftströmung 106 aus den die Seitenflächen 104A-C umgebenden Strömungsbereichen 108A-C um die Kanten der Heckseite 104D herum in den Windschattenbereich 110 umgelenkt. Somit können sowohl der Unterdruck in dem Windschattenbereich 110 zumindest teilweise kompensiert als auch Verwirbelungen vermieden werden. Dadurch kann der Luftwiderstand des LKWs 100 erheblich reduziert werden, in einigen Beispielen um mehr als 10%.

Die Form der Strömungsklappen 204A-C ist so gewählt, dass die Strömungsklappen 204A-C in die eingeklappte Stellung überführt werden können, ohne auf der Heckseite 104D zu überlappen und sich dadurch gegebenenfalls beim Ein- oder Ausklappen gegenseitig zu blockieren. Hierzu verlaufen die Oberkanten der Strömungsklappen 204A, 204B jeweils unter einem Winkel zwischen 40° und 50°, zum Beispiel 45° wie in Fig. 3d, zu der Oberkante der Heckseite 104D. Die Seitenkanten der Strömungsklappe 204C verlaufen jeweils parallel zu der angrenzenden Oberkante der entsprechenden Strömungsklappe 204A, 204B, d.h. unter einem entsprechend gewählten Winkel zwischen 40° und 50°, zum Beispiel 45° wie in Fig. 3d, zu der zugehörigen Seitenkante der Heckseite 104D.

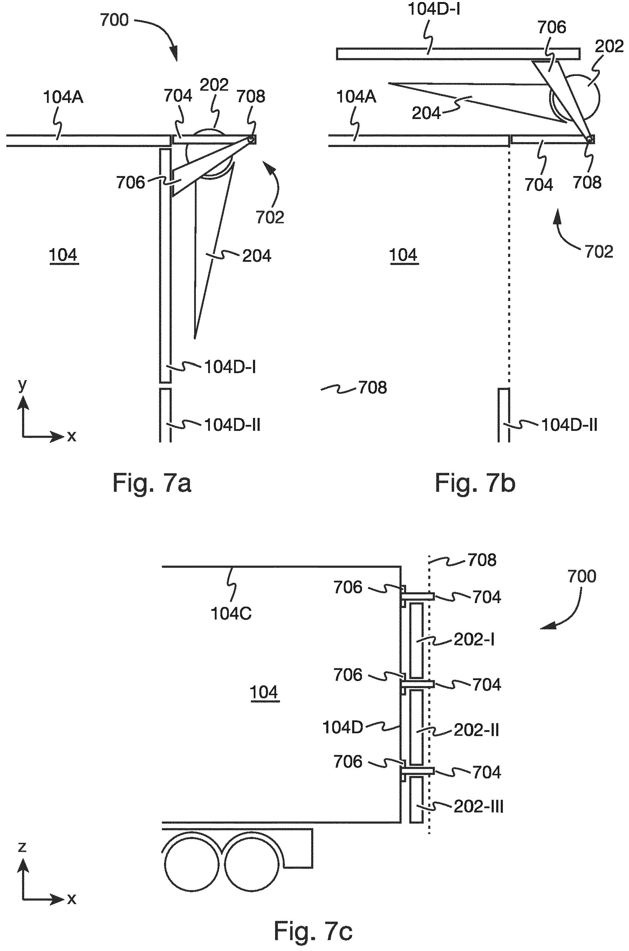

Die Aerodynamiksysteme 200A-C sind als nachrüstbare Aerodynamiksysteme ausgebildet, die dazu eingerichtet sind, von außen an dem LKW 100 abnehmbar befestigt zu werden. Hierzu können beispielsweise die seitlichen Aerodynamiksysteme 200A, 200B jeweils ein Befestigungssystem (nicht gezeigt) aufweisen, das dazu eingerichtet ist, in Türscharnieraufnahmen für die entsprechende Hecktür des Aufliegers 104 eingehängt zu werden, zum Beispiel wie unten in Bezug auf Fig. 7a-c beschrieben. Die Befestigungssysteme können zudem weitere Befestigungselemente aufweisen, beispielsweise um die Aerodynamiksysteme 200A, 200B zusätzlich mit der Hecktür zu verschrauben. Das obere Aerodynamiksystem 200C kann zum Beispiel an der Oberkante der Heckseite 104D und/oder an der oberen Seitenfläche 104C des Aufliegers 104 befestigt sein.

Die Anordnung 300 umfasst weiterhin eine Steuereinheit 302, die dazu eingerichtet ist, die Umlenkelemente 202A-C und/oder die Strömungsklappen 2o4A-C zu steuern. Die Steuereinheit 302 umfasst einen Prozessor, z.B. eine Central Processing Unit (CPU), eine Graphics Processing Unit (GPU), einen Field Programmable Gate Array (FPGA) und/oder eine anwendungsspezifische integrierte Schaltung (ASIC) sowie ein Speichermedium und kann beispielsweise in Form eines integrierten Mikrocontrollers oder System-on-a-Chip (SoC) ausgebildet sein. Das Speichermedium enthält Instruktionen zur Ausführung durch den Prozessor, um die hier beschriebene Funktionalität bereitzustellen. Daneben kann die Steuereinheit 302 weitere Elemente umfassen, zum Beispiel analoge und/oder digitale elektrische Schaltungen. Die Steuereinheit 302 kann eine oder mehrere Signalquellen umfassen, die dazu eingerichtet sind, geeignete Antriebssignale für Aktuatoren der Aerodynamiksysteme 200A-C bereitzustellen.

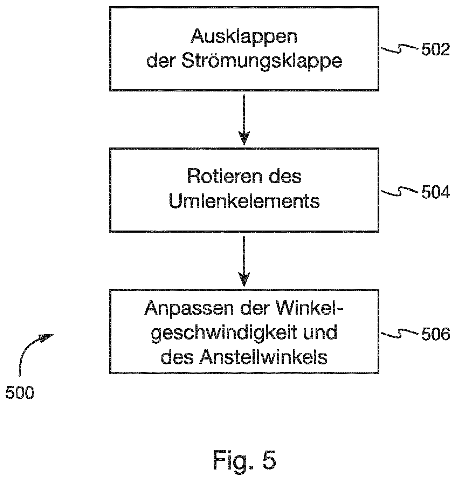

Die Steuereinheit 302 ist insbesondere dazu eingerichtet, ein Verfahren zur Luftwiderstandsreduktion bei einem Fahrzeug gemäß einer der hierin beschriebenen Ausführungsformen ganz oder in Teilen auszuführen, beispielsweise das unten in Bezug auf Fig. 5 beschriebene Verfahren 500. Hierzu ist die Steuereinheit 302 mit einem elektrischen Bordnetz (nicht gezeigt) des LKWs 100 gekoppelt, welches eine Versorgungsspannung für die Steuereinheit 302 sowie für die Aerodynamiksysteme 200A-C bereitstellt. Die Steuereinheit 302 ist weiterhin mit den Aerodynamiksystemen 200A-C, insbesondere mit den darin enthaltenen Aktuatoren wie beispielsweise den Rotationsaktuatoren 206A-C, gekoppelt, um die Umlenkelemente 202A-C und/oder die Strömungsklappen 204A-C zu steuern und die Versorgungsspannung oder geeignete Antriebssignale an die Aktuatoren auszugeben. Die Steuereinheit 302 umfasst zudem ein Kommunikationsmodul (nicht gezeigt), das dazu eingerichtet ist, mittels einer drahtlosen Kommunikationsschnittstelle (nicht gezeigt) Daten mit einem Steuergerät (nicht gezeigt) des LKWs 100 auszutauschen. Die drahtlose Kommunikationsschnittstelle kann beispielsweise eine Bluetooth-Schnittstelle, eine Wireless Local Area Network-Schnittstelle (WLAN-Schnittstelle) und/oder eine Mobilfunkschnittstelle umfassen. Alternativ oder zusätzlich kann das Kommunikationsmodul auch dazu eingerichtet sein, mittels einer kabelgebundenen Kommunikationsschnittstelle (nicht gezeigt) Daten mit dem Steuergerät des LKWs 100 auszutauschen. Das Steuergerät des LKWs 100 kann zum Beispiel ein integriertes Motorsteuergerät des LKWs 100 oder ein mobiles Steuergerät sein, welches beispielsweise im Fahrerhaus des LKWs 100 angeordnet ist und insbesondere ein Mobilfunkgerät wie beispielsweise ein Smartphone sein kann.

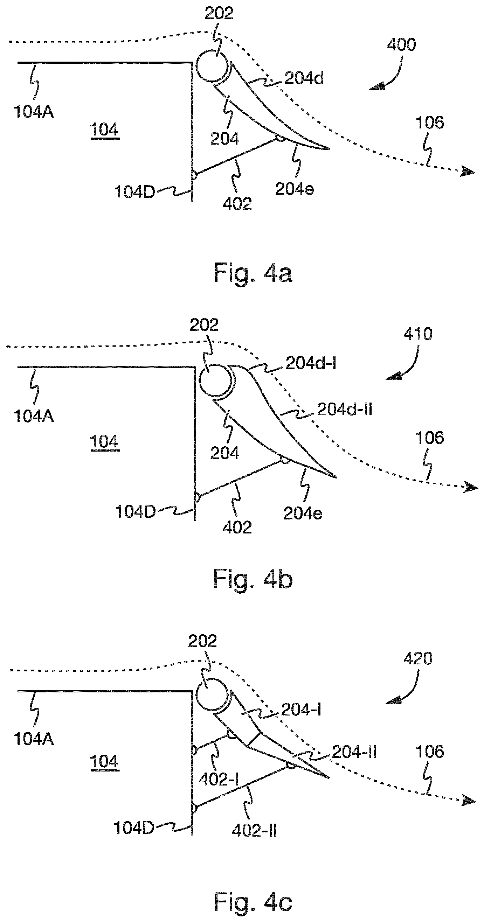

Fig. 4a-c zeigen Aerodynamiksysteme 400, 410, 420 gemäß weiteren beispielhaften Ausführungsformen der Erfindung. Die Aerodynamiksysteme 400, 410, 420 sind zur beispielhaften Illustration jeweils an der Heckseite 104D des Aufliegers 104 des LKW 100 angebracht und ähnlich dem Aerodynamiksystem 200 aus Fig. 2 ausgebildet, wobei entsprechende Elemente mit den gleichen Bezugszeichen bezeichnet sind. Insbesondere umfasst jedes der Aerodynamiksysteme 400, 410, 420 ein drehbar gelagertes Umlenkelement 202 und eine verstellbare Strömungsklappe 204, wobei die Strömungsklappen 204 in den Fig. 4a-c jeweils in der ausgeklappten Stellung gezeigt sind.

Das Aerodynamiksystem 400 umfasst einen Stellaktuator 402, der sich zwischen der Heckseite 104D und der Rückseite 204e der Strömungsklappe 204 erstreckt und dazu eingerichtet ist, die Strömungsklappe 204 reversibel zwischen der eingeklappten Stellung und der ausgeklappten Stellung zu verstellen. Der Stellaktuator 402 kann beispielsweise einen mit einem ausfahrbaren Stellelement gekoppelten Elektromotor (nicht gezeigt) umfassen, insbesondere einen elektrischen Spindelantrieb. Der Stellaktuator 402 kann an der Heckseite 104D und/oder an der Rückseite 204e der Strömungsklappe 204 beweglich gelagert sein, um ein ungehindertes Verschwenken der Strömungsklappe 204 zu ermöglichen.

Im Beispiel der Fig. 4a weist die Strömungslenkfläche 204d eine leichte konkave Krümmung in der transversalen Ebene senkrecht zur Drehachse des Umlenkelements 202 auf. Der Krümmungsradius der Strömungslenkfläche 204d kann beispielsweise zwischen 1 m und 5 m betragen und kann über die gesamte Strömungslenkfläche 204d konstant sein oder zwischen dem proximalen und dem distalen Ende der Strömungslenkfläche 204d variieren, zum Beispiel zum distalen Ende hin abnehmen. Die konkave Krümmung der Strömungslenkfläche 204d kann zum Beispiel mit einem Umlenkelement 202 mit einer größeren Eindringtiefe, beispielsweise einer Eindringtiefe zwischen 20% und 50% des Durchmessers des Umlenkelements 202, zusammenwirken, um ein effizientes Umlenken der Luftströmung 106 zu erreichen.

Bei dem Aerodynamiksystem 410 aus Fig. 4b dagegen weist das Umlenkelement 202 eine kleinere Eindringtiefe, beispielsweise zwischen 5% und 20% des Durchmessers des Umlenkelements 202, auf. Entsprechend kann das Umlenkelement 202 beispielsweise einen linearen Impuls auf die Luftströmung 106 übertragen. Um die so beschleunigte Luftströmung 106 umzulenken, weist die Strömungslenkfläche der Strömungsklappe 204 des Aerodynamiksystems 410 zwei Abschnitte 204d-I und 2o4d-II auf, wobei der erste Abschnitt 2o4d-I eine konvexe Krümmung aufweist, beispielsweise mit einem Krümmungsradius zwischen 10 cm und 50 cm, während der zweite Abschnitt 204d-II eine leichte konkave Krümmung ähnlich der Strömungslenkfläche 204d aus Fig. 4a aufweist. Die konvex-konkave Krümmung der Strömungslenkfläche kann zum Beispiel mit dem Umlenkelement 202 mit kleiner Eindringtiefe zusammenwirken, um ein effizientes Umlenken der Luftströmung 106 zu erreichen. In anderen Ausführungsformen kann eine wie in Fig. 4b ausgestaltete konvex-konkave Strömungslenkfläche auch in Kombination mit einem Umlenkelement mit größerer Eindringtiefe verwendet werden
Das Aerodynamiksystem 420 aus Fig. 4c umfasst eine Strömungsklappe 204 mit zwei Segmenten 204-I und 204-II, deren von der Heckseite 104D abgewandten Oberflächen gemeinsam die Strömungslenkfläche bilden. Die Segmente 204-I, 204-II sind gegeneinander beweglich gelagert und werden jeweils von einem eigenen Stellaktuator 402-I bzw. 402-II angetrieben, so dass die Anstellwinkel der entsprechenden Abschnitte der Strömungslenkfläche durch Verschwenken des jeweiligen Segments 204-I, 204-II unabhängig voneinander eingestellt werden können.

Fig. 5 zeigt ein Flussdiagramm eines Verfahrens 500 zur Luftwiderstandsreduktion bei einem Fahrzeug gemäß einer beispielhaften Ausführungsform der Erfindung. Das Verfahren 500 wird mit einem erfindungsgemäßen Aerodynamiksystem gemäß einer der hierin beschriebenen Ausführungsformen durchgeführt. Im Folgenden wird das Verfahren 500 anhand des Aerodynamiksystems 200 aus Fig. 2 beispielhaft beschrieben. Das Verfahren kann aber auch mit anderen erfindungsgemäßen Aerodynamiksystemen durchgeführt werden, beispielsweise mit der Anordnung 300 oder einem der Aerodynamiksysteme 400, 410, 420. Das Verfahren 500 kann ganz oder teilweise von einer Steuereinheit des entsprechenden Aerodynamiksystems ausgeführt werden, beispielsweise der Steuereinheit 302 aus Fig. 3a-d. Die Ausführung des Verfahrens 500 ist nicht auf die durch das Flussdiagramm in Fig. 5 angedeutete Abfolge beschränkt. Soweit technisch möglich können die Schritte des Verfahrens 500 in einer beliebigen Reihenfolge und insbesondere auch zumindest teilweise gleichzeitig ausgeführt werden.

Das Verfahren 500 umfasst, in Schritt 502, das Ausklappen der Strömungsklappe 204 von der eingeklappten Stellung in die ausgeklappte Stellung, beispielsweise mittels eines Stellaktuators wie in Fig. 4a gezeigt. Die Strömungsklappe 204 kann zum Beispiel bei Erreichen einer bestimmten Geschwindigkeit ausgeklappt werden, zum Beispiel sobald die Geschwindigkeit des LKWs 100 einen Wert von 60 km/h übersteigt. In manchen Ausgestaltungen kann die Strömungsklappe nur dann ausgeklappt werden, wenn das Aerodynamiksystem 200 von dem Fahrer des LKWs 100 freigegeben wurde und/oder eine weitere Bedingung erfüllt ist, beispielsweise dass der LKW 100 sich auf einer Autobahn befindet.

Das Verfahren 500 umfasst weiterhin, in Schritt 504, das Rotieren des Umlenkelements 202 um die Drehachse während die Strömungsklappe 204 in der ausgeklappten Stellung ist. Hierzu kann das Umlenkelement 202 beispielsweise mittels eines Rotationsaktuators wie des Rotationsaktuators 206 aus Fig. 3a, 3b auf eine vorgegebene Winkelgeschwindigkeit ω beschleunigt werden. Das Umlenkelement 202 kann in Schritt 504 um eine Vielzahl von vollständigen Umdrehungen um die Drehachse rotiert werden. Die Strömungsklappe 204 bewegt sich während des gesamten Schritts 504 nicht, sondern verbleibt stationär in der ausgeklappten Stellung. Das Umlenkelement 202 kann gleichzeitig mit dem Ausklappen der Strömungsklappe 204 in Bewegung versetzt werden, zum Beispiel bei Erreichen der vorgegebenen Geschwindigkeit. In anderen Ausgestaltungen kann das Umlenkelement 202 auch vor oder nach dem Ausklappen der Strömungsklappe in Bewegung versetzt werden, zum Beispiel bei Erreichen eines niedrigeren oder höheren Schwellenwerts für die Geschwindigkeit. In einem Beispiel kann das Umlenkelement 202 sich zunächst in einem Freilauf befinden, in dem das Umlenkelement 202 von der Luftströmung 106 in Bewegung versetzt werden kann. Zusätzlich kann die Rotation des Umlenkelements 202 mittels des Rotationsaktuators 206 aktiv angetrieben werden, zum Beispiel sobald der LKW 100 eine vorgebbare Geschwindigkeit erreicht.

Das Verfahren 500 umfasst ferner, in Schritt 506, das Anpassen von einem oder mehreren Parametern des Aerodynamiksystems 200, beispielsweise abhängig von der Geschwindigkeit des LKWs 100. Zum Beispiel kann die Winkelgeschwindigkeit ω des Umlenkelements 202 mit zunehmender Geschwindigkeit erhöht werden, beispielsweise so, dass eine Umlaufgeschwindigkeit der Außenfläche des Umlenkelements 202 proportional zu der Geschwindigkeit des LKWs 100 ist. Die Umlaufgeschwindigkeit kann beispielsweise zwischen 25% und 400%, in manchen Beispielen zwischen 50% und 200%, in einem Beispiel zwischen 75% und 150% der Geschwindigkeit des LKWs 100 betragen.

Alternativ oder zusätzlich kann die Eindringtiefe Δ des Umlenkelements 202 angepasst werden. Beispielsweise kann in einem ersten, niedrigeren Geschwindigkeitsbereich, zum Beispiel zwischen 30 km/h und 60 km/h, eine erste, kleinere Eindringtiefe Δ verwendet werden, zum Beispiel zwischen 5% und 20% des Durchmessers d des Umlenkelements 202, und in einem zweiten, höheren Geschwindigkeitsbereich, zum Beispiel zwischen 60 km/h und 100 km/h, eine zweite, größere Eindringtiefe Δ verwendet werden, zum Beispiel zwischen 20% und 50% des Durchmessers d des Umlenkelements 202.

Alternativ oder zusätzlich kann der Anstellwinkel α der Strömungslenkfläche 204d angepasst werden. Beispielsweise kann die Strömungsklappe 204 zunächst, d.h. zum Beispiel bei Erreichen des vorgegebenen Geschwindigkeitsschwellwerts, auf einen ersten Anstellwinkel, zum Beispiel zwischen 20° und 40°, ausgeklappt werden. Während die Strömungsklappe 204 in dem ersten Anstellwinkel verbleibt kann das Umlenkelement 202 um die Drehachse rotiert werden. Ausgehend von dem ersten Anstellwinkel kann der Anstellwinkel dann abhängig von der Geschwindigkeit in diskreten Schritten oder kontinuierlich mit zunehmender Geschwindigkeit erhöht werden, beispielsweise bis auf 60° bei einer Geschwindigkeit von 100 km/h. Der Anstellwinkel bei 100 km/h kann beispielsweise zwischen 0° und 30°, in einigen Beispielen zwischen 0° und 15°, in einem Beispiel zwischen 0° und 5° größer als der erste Anstellwinkel sein.

Für Aerodynamiksysteme mit Strömungsklappen mit mehreren Segmenten, wie beispielsweise das Aerodynamiksystem 420 aus Fig. 4c, können die Anstellwinkel der Segmente einzeln angepasst werden. Beispielsweise können die beiden Segmente 204-I, 204-II zunächst, d.h. zum Beispiel bei Erreichen des vorgegebenen Geschwindigkeitsschwellenwerts, auf einen ersten Anstellwinkel, zum Beispiel zwischen 20° und 40°, ausgeklappt werden. Ausgehend von dem ersten Anstellwinkel kann dann der Anstellwinkel des ersten oder des zweiten Segments 204-II abhängig von der Geschwindigkeit in diskreten Schritten oder kontinuierlich mit zunehmender Geschwindigkeit erhöht werden, beispielsweise bis auf 60° bei einer Geschwindigkeit von 100 km/h. Der Anstellwinkel des anderen Segments kann in einigen Fällen nicht verändert werden, d.h. wird konstant auf dem ersten Anstellwinkel gehalten werden, oder kann beispielsweise in anderen Schritten erhöht werden.

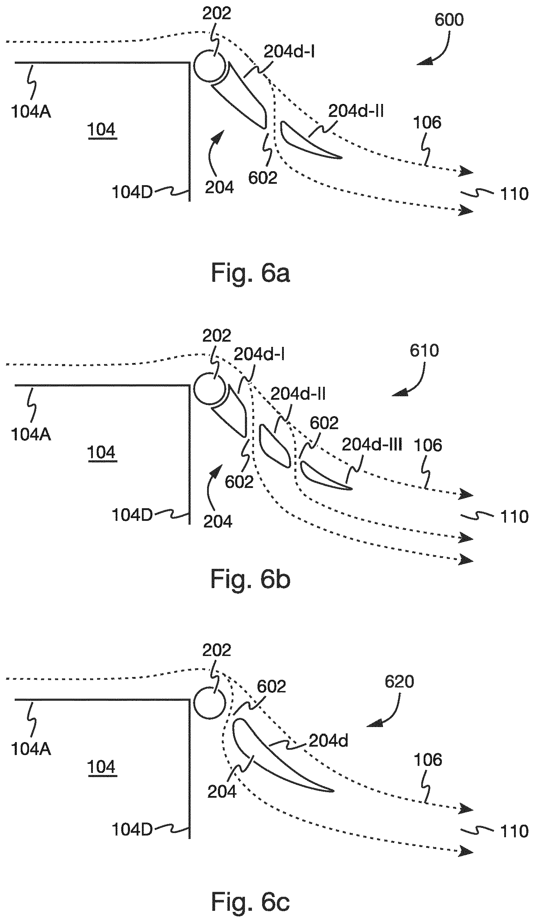

Fig. 6a-c zeigen Aerodynamiksysteme 600, 610, 620 gemäß weiteren beispielhaften Ausführungsformen der Erfindung. Die Aerodynamiksysteme 600, 610, 620 sind zur beispielhaften Illustration jeweils an der Heckseite 104D des Aufliegers 104 des LKWs 100 angebracht und ähnlich dem Aerodynamiksystem 400 aus Fig. 4a ausgebildet, wobei entsprechende Elemente mit den gleichen Bezugszeichen bezeichnet sind. Insbesondere umfasst jedes der Aerodynamiksysteme 600, 610, 620 ein drehbar gelagertes Umlenkelement 202 und eine verstellbare Strömungsklappe 204, wobei die Strömungsklappen 204 in den Fig. 6a-c jeweils in der ausgeklappten Stellung gezeigt sind.

Die Strömungslenkfläche der Strömungsklappe 204 des Aerodynamiksystems 600 in Fig. 6a weist zwei Abschnitte 204d-I, 2o4d-II auf, die durch einen Spalt 602 voneinander beabstandet sind. Der Spalt 602 erstreckt sich von der Strömungslenkfläche durch die Strömungsklappe 204 hindurch. Ein Teil der Luftströmung 106 kann an dem ersten oder proximalen Abschnitt 204d-I der Strömungslenkfläche vorbei durch den Spalt 602 hindurch auf die Rückseite der Strömungsklappe 204 fließen und dort an einem dem zweiten oder distalen Abschnitt 2o4d-II der Strömungslenkfläche gegenüberliegenden distalen Rückseitenabschnitt der Strömungsklappe 204 vorbei in den Windschattenbereich 110 hineinströmen. Dies kann beispielsweise vorteilhaft sein, um einen energiereichen Teil der Luftströmung 106 auf die Rückseite der Strömungsklappe 204 zu befördern, um dort einen Unterdruck zu erzeugen und somit die von der Luftströmung 106 auf die Strömungsklappe 204 ausgeübte Kraft zu erhöhen. Der Spalt 602 kann sich in axialer Richtung, d.h. entlang der Blickrichtung in Fig. 6a, über die gesamte Länge der Strömungsklappe 204 oder einen Teil davon erstrecken, beispielsweise so, dass der Spalt in einem in axialer Richtung mittleren Bereich der Strömungsklappe 204 angeordnet ist, aber nicht in Endbereichen der Strömungsklappe 204 in axialer Richtung. Die Abschnitte 204d-I, 2o4d-II können entsprechend starr miteinander verbunden sein. In anderen Ausführungsformen können die Abschnitte 204d-I, 2o4d-II gegeneinander beweglich sein und beispielsweise Abschnitte der Strömungslenkfläche auf gegeneinander beweglichen Segmenten der Strömungsklappe 204 sein, zum Beispiel ähnlich den Segmenten 204-I, 204-II in Fig. 4c. Der Spalt 602 kann in radialer Richtung beispielsweise eine Breite zwischen 5 cm und 30 cm, in einem Beispiel zwischen 10 cm und 20 cm aufweisen.

Die Strömungsklappe 204 des Aerodynamiksystems 610 in Fig. 6b ist ähnlich der Strömungsklappe des Aerodynamiksystems 600 aus Fig. 6a ausgebildet, allerdings weist die Strömungslenkfläche des Aerodynamiksystems 610 drei Abschnitte 204d-I, 204d-II, 204d-III auf, wobei benachbarte Abschnitte der Strömungslenkfläche jeweils durch einen Spalt 602 voneinander beabstandet sind, durch den ein Teil der Luftströmung 106 in den Windschattenbereich 110 auf der Rückseite der Strömungsklappe 204 gelangen kann. Jeder der Spalte 602 kann beispielsweise wie oben für das Aerodynamiksystem 600 beschrieben ausgebildet sein.

Bei dem Aerodynamiksystem 620 aus Fig. 6c ist die Strömungslenkfläche 204d als durchgängige Fläche ohne Spalt ausgebildet. Allerdings ist ein proximales Ende der Strömungslenkfläche 204d durch einen Spalt 602 von dem Umlenkelement 202 beabstandet. Durch die Rotation des Umlenkelements 202 kann ein Teil der Luftströmung 106 zwischen dem Umlenkelement 202 und der Strömungsklappe 204 durch den Spalt 602 hindurch auf die Rückseite der Strömungsklappe 204 gelangen. Der Spalt 602 kann sich in axialer Richtung beispielsweise entlang der gesamten Länge der Strömungsklappe 204 erstrecken. In anderen Ausgestaltungen kann die Strömungslenkfläche 204d zudem ähnlich der Strömungslenkflächen der Aerodynamiksysteme 600 und 610 mehrere durch einen oder mehrere Spalte 602 voneinander beabstandete Abschnitte aufweisen.

Fig. 7a-c zeigen ein Aerodynamiksystem 700 gemäß einer weiteren beispielhaften Ausführungsform der Erfindung, wobei das Aerodynamiksystem 700 mittels eines Befestigungssystems 702 an einer Hecktür 104D-I an einer Heckseite 104D eines Aufliegers 104 angebracht ist. Das Aerodynamiksystem 700 ist in Fig. 7a und 7b in Draufsicht gezeigt, wobei die Hecktür 104D-I in Fig. 7a geschlossen und in Fig. 7b geöffnet ist. In Fig. 7c ist das Aerodynamiksystem 700 bei geschlossener Hecktür 104D-I in einer Seitenansicht dargestellt.

Das Aerodynamiksystem 700 ist ein nachrüstbares Aerodynamiksystem, das dazu eingerichtet ist, von außen an dem Auflieger 104 abnehmbar befestigt zu werden. Das Aerodynamiksystem 700 ist ähnlich dem Aerodynamiksystem 200 aus Fig. 2 ausgebildet und umfasst ebenfalls ein drehbar gelagertes Umlenkelement 202 und eine ausklappbare Strömungsklappe 204, wobei die Strömungsklappe 204 in den Fig. 7a-c jeweils in der eingeklappten Stellung gezeigt ist.

Die Heckseite 104D des Aufliegers 104 weist zwei Hecktüren auf, nämlich eine rechte Hecktür 104D-I und eine linke Hecktür 104D-II. Das Aerodynamiksystem 700 umfasst ein Befestigungssystem 702, mittels dessen das Umlenkelement 202 und die Strömungsklappe 204 an der rechten Hecktür 104D-I angebracht sind. Das Befestigungssystem 702 umfasst mehrere Scharniere, die jeweils einen ersten Beschlag 704 und einen zweiten Beschlag 706 umfassen. Die Scharniere können in einigen Ausführungsformen dazu eingerichtet sein, Türscharniere des Aufliegers 104 zu ersetzen.

Der erste Beschlag 704 ist an der Heckseite 104D und/oder an der Seitenfläche 104A des Aufliegers 104 befestigt und kann beispielsweise in einer entsprechenden Türscharnieraufnahme an dem Auflieger 104 eingehängt sein. Alternativ oder zusätzlich kann der erste Beschlag 704 auch mittels weiterer Befestigungsmittel wie beispielsweise Schrauben an der Heckseite 104D und/oder an der Seitenfläche 104A befestigt sein. Der zweite Beschlag 706 ist an der Hecktür 104D-I befestigt und kann beispielsweise in einer entsprechenden Türscharnieraufnahme an der Hecktür 104D-I eingehängt sein. Alternativ oder zusätzlich kann der zweite Beschlag 706 auch mittels weiterer Befestigungsmittel wie beispielsweise Schrauben an der Hecktür 104D-I befestigt sein.

Der zweite Beschlag 706 kann weiterhin mit dem Umlenkelement 202 und/oder der Strömungsklappe 204 verbunden sein und kann beispielsweise eine entsprechende Führung oder Lagerung für das Umlenkelement 202 und/oder für die Strömungsklappe aufweisen. In anderen Ausführungsformen kann das Umlenkelement 202 und/oder die Strömungsklappe 204 alternativ oder zusätzlich auch mittels anderer Verbindungselemente mit der Hecktür 104D-I verbunden sein.

Die Scharniere des Befestigungssystems 702 sind so ausgebildet, dass der an der Hecktür 104D-I befestigte zweite Beschlag 706 gegenüber dem an dem Auflieger 104 befestigten ersten Beschlag 704 um eine Schwenkachse 708 verschwenkt werden kann, um die Hecktür 104D-I zu öffnen oder zu schließen. Vorzugsweise sind die Scharniere so ausgebildet, dass die Schwenkachse 708 in Fahrtrichtung hinter dem Umlenkelement 202 und/oder der eingeklappten Strömungsklappe 204 angeordnet ist. Dies ermöglicht es beispielsweise, wie in Fig. 7b gezeigt, die Hecktür 104D-I durch Verschwenken um die Schwenkachse 708 um bis zu 270° zu öffnen, beispielsweise so dass die Hecktür 104D-I im geöffneten Zustand parallel zu der Seitenfläche 104A angeordnet ist.

Das Umlenkelement 202 ist entlang seiner Drehachse, die vorzugsweise parallel zu der Schwenkachse 708 verläuft, in eine Vielzahl von Segmenten unterteilt, beispielsweise in drei Segmente 202-I, 202-II, 202-III wie in Fig. 7c gezeigt. Jedes der Segmente 202-I bis 202-III kann zum Beispiel an einem oder an beiden Enden in einer Führung an dem zweiten Beschlag 706 drehbar gelagert sein und kann dazu eingerichtet sein, unabhängig von den anderen Segmenten des Umlenkelements 202 und der Strömungsklappe 204 um die Drehachse gedreht zu werden. In manchen Ausführungsformen kann auch die Strömungsklappe 204 entlang der Drehachse in mehrere Segmente unterteilt sein, die unabhängig voneinander aus- und eingeklappt werden können, beispielsweise ebenfalls in drei Segmente ähnlich dem Umlenkelement 202. In anderen Ausgestaltungen kann die Strömungsklappe 204 als eine Struktur mit einer durchgehenden Strömungslenkfläche ausgebildet sein.

Die beschriebenen erfindungsgemäßen Ausführungsformen und die Figuren dienen nur zur rein beispielhaften Illustration. Die Erfindung kann in ihrer Gestalt variieren, ohne dass sich das zugrundeliegende Funktionsprinzip ändert. Der Schutzumfang des erfindungsgemässen Systems und der erfindungsgemässen Anordnung und des erfindungsgemäßen Verfahrens ergibt sich allein aus den folgenden Ansprüchen.

### LISTE DER BEZUGSZEICHEN

100 - Fahrzeug/Lastkraftwagen
102 - Zugmaschine
104 - Auflieger
104A, 104B, 104C - Seitenflächen des Aufliegers 104
104D - Heckseite des Aufliegers 104
106 - Luftströmung
108A, 108B, 108C - Strömungsbereiche
110 - Windschattenbereich
112 - Verwirbelungen
200 - Aerodynamiksystem
202 - Umlenkelement
204 - Strömungsklappe
204d - Strömungslenkfläche der Strömungsklappe 204
204e - Rückseite der Strömungsklappe 204
d - Durchmesser des Umlenkelements 202
Δ - Eindringtiefe des Umlenkelements 202
ω - Winkelgeschwindigkeit des Umlenkelements 202
B - Breite der Strömungsklappe 204
α - Anstellwinkel der Strömungslenkfläche 204d
300 - Anordnung zur Verwendung an einem Fahrzeug
200A, 200B, 200C - Aerodynamiksysteme
202A, 202B, 202C - Umlenkelemente
202C-I, 202C-II - Segmente des Umlenkelements 202C
204A, 204B, 204C - Strömungsklappen
204C-I, 204C-II - Segmente der Strömungsklappe 204C
206A, 206B, 206D - Rotationsaktuatoren
302 - Steuereinheit
400, 410, 420 - Aerodynamiksysteme
402, 402-I, 402-II - Stellaktuatoren
204d-I - erster Abschnitt der Strömungslenkfläche
204d-II - zweiter Abschnitt der Strömungslenkfläche
204-I - erstes Segment der Strömungsklappe
204-II - zweites Segment der Strömungsklappe
500 - Verfahren zur Luftwiderstandsreduktion bei einem Fahrzeug
502 - Ausklappen der Strömungsklappe
504 - Rotieren des Umlenkelements
506 - Anpassen der Parameter des Aerodynamiksystems
600, 610, 620 - Aerodynamiksysteme
204d-I, 204d-II, 204d-III - Abschnitte der Strömungslenkfläche 204d
602 - Spalt
700 - Aerodynamiksystem
702 - Befestigungssystem
704 - erster Beschlag
706 - zweiter Beschlag
708 - Schwenkachse
104D-I, 104D-II - Hecktüren
202-I, 202-II, 202-II - Segmente des Umlenkelements 202

## Patentansprüche

1. Aerodynamiksystem (200) für ein Fahrzeug (100), insbesondere einen Lastkraftwagen, umfassend:
ein Umlenkelement (202), welches sich entlang einer Drehachse erstreckt und um mindestens 360° um die Drehachse rotierbar ist; und
eine Strömungsklappe (204), die von einer eingeklappten Stellung in eine ausgeklappte Stellung überführbar ist,
wobei:
das Umlenkelement (202) dazu eingerichtet ist, an einer Heckseite (104D) des Fahrzeugs (100) angebracht zu werden, so dass die Drehachse parallel zu einer Kante der Heckseite (104D) verläuft, und das Umlenkelement (202) dazu eingerichtet ist, um die Drehachse zu rotieren während die Strömungsklappe (204) in der ausgeklappten Stellung ist; und
die Strömungsklappe (204) dazu eingerichtet ist, an der Heckseite (104D) des Fahrzeugs (100) angebracht zu werden, so dass in der ausgeklappten Stellung eine einem Strömungsbereich (108A-C) zugewandte Strömungslenkfläche (204d) der Strömungsklappe (204) in Fahrtrichtung hinter dem Umlenkelement (202) angeordnet ist und sich von dem Umlenkelement (202) in einen in Fahrtrichtung hinter der Heckseite (104D) liegenden Windschattenbereich (110) hinein erstreckt.

2. Aerodynamiksystem (200) nach Anspruch 1, wobei das Umlenkelement (202) dazu eingerichtet ist, so an der Heckseite (104D) des Fahrzeugs (100) angebracht zu werden, dass das Umlenkelement (202) teilweise über eine an der Kante an die Heckseite (104D) angrenzende Seitenfläche (104A-C) des Fahrzeugs (100) hinaus in den Strömungsbereich (108A-C) ragt, wobei eine Eindringtiefe (Δ) des Umlenkelements (202) in den Strömungsbereich (108A-C) vorzugsweise zwischen 10% und 50% eines Durchmessers (d) des Umlenkelements (202) senkrecht zu der Drehachse beträgt und/oder wobei das Umlenkelement (202) vorzugsweise dazu eingerichtet ist, senkrecht zu der Drehachse verschoben zu werden, um die Eindringtiefe (Δ) des Umlenkelements (202) in den Strömungsbereich (108A-C) anzupassen.

3. Aerodynamiksystem (200) nach Anspruch 1 oder 2, wobei die Strömungsklappe (204) um eine Schwenkachse von der eingeklappten Stellung in die ausgeklappte Stellung schwenkbar ist, wobei die Schwenkachse vorzugsweise der Drehachse entspricht, und/oder wobei die Strömungsklappe (204) in der eingeklappten Stellung parallel zu der Heckseite (104D) des Fahrzeugs (100) angeordnet ist.

4. Aerodynamiksystem (200) nach einem der vorhergehenden Ansprüche, wobei die Strömungslenkfläche (204d) in der ausgeklappten Stellung tangential an einen Außenumfang des Umlenkelements (202) angrenzt und/oder wobei die Strömungslenkfläche (204d) in der ausgeklappten Stellung unter einem Anstellwinkel (α) zwischen 20° und 60°, vorzugsweise zwischen 30° und 50° von der Heckseite (104A) verläuft.

5. Aerodynamiksystem (410) nach einem der vorhergehenden Ansprüche, wobei:
die Strömungslenkfläche (204d) einen ersten Abschnitt (204d-I) und einen zweiten Abschnitt (204d-II) aufweist, wobei der erste Abschnitt (204d-1) im ausgeklappten Zustand zwischen dem zweiten Abschnitt (2o4d-II) und dem Umlenkelement (202) angeordnet ist, der erste Abschnitt (204d-I) eine konvexe Krümmung aufweist und der zweite Abschnitt (204d-II) keine Krümmung oder eine konkave Krümmung aufweist; und/oder
die Strömungsklappe (204) ein erstes Segment (204-I) und ein zweites Segment (204-II) aufweist, wobei das erste Segment (204-I) zwischen dem zweiten Segment (204-II) und dem Umlenkelement (202) angeordnet ist, das erste Segment (204-I) gegenüber dem Umlenkelement (202) verschwenkbar ist und das zweite Segment (204-II) gegenüber dem ersten Segment (204-I) verschwenkbar ist.

6. Aerodynamiksystem (400) nach einem der vorhergehenden Ansprüche, ferner umfassend einen Stellaktuator (402), der dazu eingerichtet ist, an einer der Strömungslenkfläche (204d) gegenüberliegenden Rückseite (204e) der Strömungsklappe (204) und an der Heckseite (104D) des Fahrzeugs (100) befestigt zu werden und die Strömungsklappe (204) von der eingeklappten Stellung in die ausgeklappte Stellung zu überführen.

7. Aerodynamiksystem (700) nach einem der vorhergehenden Ansprüche, wobei das Umlenkelement (202) eine Vielzahl von entlang der Drehachse angeordneten Segmenten (202-I, 202-II, 202-III) aufweist, die jeweils dazu eingerichtet sind, unabhängig von den anderen Segmenten des Umlenkelements (202) um die Drehachse rotiert zu werden.

8. Aerodynamiksystem (700) nach einem der vorhergehenden Ansprüche, wobei das Aerodynamiksystem (700) ein nachrüstbares Aerodynamiksystem ist, welches dazu eingerichtet ist, von außen an dem Fahrzeug (100) abnehmbar befestigt zu werden.

9. Aerodynamiksystem (700) nach Anspruch 8, wobei das Aerodynamiksystem (700) umfasst:
ein Befestigungssystem (702), welches dazu eingerichtet ist, in eine Türscharnieraufnahme des Fahrzeugs (100) eingehängt zu werden, um das Umlenkelement (202) und die Strömungsklappe (204) an der Heckseite (104D) anzubringen; und/oder
ein Scharnier (704, 706), das dazu eingerichtet ist, eine Hecktür (104D-I, 104D-II) des Fahrzeugs (100) schwenkbar an der Heckseite (104D) und/oder einer Seitenfläche (104A-C) des Fahrzeugs (100) zu befestigen, wobei eine Schwenkachse (708) des Scharniers (704, 706) in Fahrtrichtung hinter dem Umlenkelement (202) und/oder hinter der Strömungsklappe (204) in der eingeklappten Stellung angeordnet ist.

10. Aerodynamiksystem (200) nach Anspruch 8 oder 9, ferner umfassend:
einen Rotationsaktuator (206A-C), der dazu eingerichtet ist, das Umlenkelement (202) um die Drehachse zu rotieren; und
einen Stellaktuator (402), der dazu eingerichtet ist, die Strömungsklappe (204) von der eingeklappten Stellung in die ausgeklappte Stellung zu überführen,
wobei der Rotationsaktuator und der Stellaktuator (402) dazu eingerichtet sind, mit einem elektrischen Bordnetz und/oder einem Hydrauliksystem in dem Fahrzeug (100) gekoppelt zu werden.

11. Anordnung (300) zur Verwendung an einem Fahrzeug (100), insbesondere einem Lastkraftwagen, umfassend ein erstes Aerodynamiksystem (200A) nach einem der vorhergehenden Ansprüche, ein zweites Aerodynamiksystem (200B) nach einem der vorhergehenden Ansprüche und ein drittes Aerodynamiksystem (200C) nach einem der vorhergehenden Ansprüche, wobei:
das erste Aerodynamiksystem (200A) dazu eingerichtet ist, entlang einer in Fahrtrichtung gesehen rechten Seitenkante der Heckseite (104D) des Fahrzeugs (100) angebracht zu werden;
das zweite Aerodynamiksystem (200B) dazu eingerichtet ist, entlang einer in Fahrtrichtung gesehen linken Seitenkante der Heckseite (104D) angebracht zu werden;
das dritte Aerodynamiksystem (200C) dazu eingerichtet ist, entlang einer Oberkante der Heckseite (104D) angebracht zu werden;
Oberkanten der Strömungsklappen (204A, 204B) des ersten und des zweiten Aerodynamiksystems (200A, 200B) jeweils unter einem Winkel zu der Oberkante der Heckseite (104D) verlaufen und Seitenkanten der Strömungsklappe (204C) des dritten Aerodynamiksystems (200C) jeweils unter einem Winkel zu der entsprechenden Seitenkante der Heckseite (104D) verlaufen, so dass die Strömungsklappe (2o4C) des dritten Aerodynamiksystems (200C) im eingeklappten Zustand nicht mit den Strömungsklappen (204A, 204B) des ersten und des zweiten Aerodynamiksystems (200A, 200B) überlappt.

12. Verfahren (500) zur Luftwiderstandsreduktion bei einem Fahrzeug (100) mittels eines Aerodynamiksystems (200) nach einem der vorhergehenden Ansprüche, das Verfahren (500) umfassend:
Ausklappen der Strömungsklappe (204) von der eingeklappten Stellung in die ausgeklappte Stellung; und
Rotieren des Umlenkelements (202) um die Drehachse um mindestens eine vollständige Umdrehung während die Strömungsklappe (204) in der ausgeklappten Stellung ist.

13. Verfahren (500) nach Anspruch 12, wobei:
die Strömungsklappe (204) von der eingeklappten Stellung in die ausgeklappte Stellung ausgeklappt wird, wenn eine Geschwindigkeit des Fahrzeugs (100) einen ersten Schwellenwert überschreitet, und die Rotation des Umlenkelements (202) angetrieben wird, wenn die Geschwindigkeit einen zweiten Schwellenwert überschreitet; und/oder
das Verfahren (500) ferner das Anpassen einer Winkelgeschwindigkeit (ω) des Umlenkelements (202), der Eindringtiefe (Δ) des Umlenkelements (202) in den Strömungsbereich (108A-C) und/oder des Anstellwinkels (α) der Strömungslenkfläche (204d) in der ausgeklappten Stellung abhängig von der Geschwindigkeit des Fahrzeugs (100) umfasst.

14. Verfahren (500) nach Anspruch 12 oder 13, ferner umfassend:
das Einklappen der Strömungsklappe (204) von der ausgeklappten Stellung in die eingeklappte Stellung und/oder das Abbremsen oder Anhalten der Rotation des Umlenkelements (202), sobald eine Bremsverzögerung des Fahrzeugs (100) einen vorgegebenen Schwellenwert übersteigt; und/oder
das Anpassen des Anstellwinkels (α) der Strömungslenkfläche (204d) in der ausgeklappten Stellung, der Winkelgeschwindigkeit (ω) des Umlenkelements (202) und/oder der Eindringtiefe (Δ) des Umlenkelements (202) an eine Anströmrichtung einer Luftströmung.

15. Aerodynamiksystem (200) nach einem der Ansprüche 1 bis 11, ferner umfassend eine Steuereinheit (302), wobei die Steuereinheit (302) dazu eingerichtet ist, das Verfahren (500) nach einem der Ansprüche 12 bis 14 auszuführen, wobei die Steuereinheit (302) vorzugsweise ein Kommunikationsmodul aufweist, welches dazu eingerichtet ist, mittels einer kabelgebundenen und/oder drahtlosen Kommunikationsschnittstelle Daten mit einem Steuergerät des Fahrzeugs (100) auszutauschen.

## Claims

1. An aerodynamics system (200) for a vehicle (100), in particular a truck, comprising:
a deflection element (202) which extends along an axis of rotation and is rotatable by at least 360° about the axis of rotation; and
a flow flap (204) which is transferable from a folded position into an unfolded position,
wherein:
the deflection element (202) is configured to be mounted to a rear side (104D) of the vehicle (100) such that the axis of rotation runs parallel to an edge of the rear side (104D), and the deflection element (202) is configured to rotate about the axis of rotation while the flow flap (204) is in the unfolded position; and
the flow flap (204) is configured to be mounted to the rear side (104D) of the vehicle (100) such that, in the unfolded position, a flow guiding surface (204d) of the flow flap (204) facing a flow region (108A-C) is arranged behind the deflection element (202) in a direction of travel and extends from the deflection element (202) into a slipstream region (110) located behind the rear side (104D) in the direction of travel.

2. The aerodynamics system (200) according to claim 1, wherein the deflection element (202) is configured to be mounted to the rear side (104D) of the vehicle (100) such that the deflection element (202) protrudes partially beyond a side surface (104A-C) of the vehicle (100) adjoining the rear side (104D) at the edge into the flow region (108A-C), wherein a penetration depth (Δ) of the deflection element (202) into the flow region (108A-C) is preferably between 10% and 50% of a diameter (d) of the deflection element (202) perpendicular to the axis of rotation and/or wherein the deflection element (202) is preferably configured to be displaced perpendicular to the axis of rotation to adapt the penetration depth (Δ) of the deflection element (202) into the flow region (108A-C).

3. The aerodynamics system (200) according to claim 1 or 2, wherein the flow flap (204) is pivotable about a pivot axis from the folded position into the unfolded position, wherein the pivot axis preferably corresponds to the axis of rotation, and/or wherein the flow flap (204) is arranged parallel to the rear side (104D) of the vehicle (100) in the folded position.

4. The aerodynamics system (200) according to any one of the preceding claims, wherein the flow guiding surface (204d) tangentially adjoins an outer circumference of the deflection element (202) in the unfolded position and/or wherein the flow guiding surface (204d) extends at an angle of attack (α) between 20° and 60°, preferably between 30° and 50°, from the rear side (104A) in the unfolded position.

5. The aerodynamics system (410) according to any one of the preceding claims, wherein:
the flow guiding surface (204d) has a first section (204d-I) and a second section (204d-II), wherein the first section (204d-I) is arranged between the second section (204d-II) and the deflection element (202) in the unfolded state, the first section (204d-I) has a convex curvature and the second section (204d-II) has no curvature or a concave curvature; and/or
the flow flap (204) has a first segment (204-I) and a second segment (204-II), wherein the first segment (204-I) is arranged between the second segment (204-II) and the deflection element (202), the first segment (204-I) is pivotable with respect to the deflection element (202) and the second segment (204-II) is pivotable with respect to the first segment (204-I).

6. The aerodynamics system (400) according to any one of the preceding claims, further comprising a positioning actuator (402) which is configured to be attached to a back side (204e) of the flow flap (204) opposite the flow guiding surface (204d) and to the rear side (104D) of the vehicle (100) and to transfer the flow flap (204) from the folded position into the unfolded position.

7. The aerodynamics system (700) according to any one of the preceding claims, wherein the deflection element (202) has a plurality of segments (202-I, 202-II, 202-III) arranged along the axis of rotation, which are each configured to be rotated about the axis of rotation independently of the other segments of the deflection element (202).

8. The aerodynamics system (700) according to any one of the preceding claims, wherein the aerodynamics system (700) is a retrofittable aerodynamics system which is configured to be detachably attached to the vehicle (100) from the outside.

9. The aerodynamics system (700) according to claim 8, wherein the aerodynamics system (700) comprises:
an attachment system (702) which is configured to be hooked into a door hinge mount of the vehicle (100) to mount the deflection element (202) and the flow flap (204) to the rear side (104D); and/or
a hinge (704, 706) which is configured to pivotably attach a rear door (104D-I, 104D-II) of the vehicle (100) to the rear side (104D) and/or a side surface (104A-C) of the vehicle (100), wherein a pivot axis (708) of the hinge (704, 706) is arranged behind the deflection element (202) in the direction of travel and/or behind the flow flap (204) in the folded position.

10. The aerodynamics system (200) according to claim 8 or 9, further comprising:
a rotation actuator (206A-C) which is configured to rotate the deflection element (202) about the axis of rotation; and
a positioning actuator (402) which is configured to transfer the flow flap (204) from the folded position into the unfolded position,
wherein the rotation actuator and the positioning actuator (402) are configured to be coupled to an on-board electrical system and/or a hydraulic system in the vehicle (100).

11. An arrangement (300) for use on a vehicle (100), in particular a truck, comprising a first aerodynamics system (200A) according to any one of the preceding claims, a second aerodynamics system (200B) according to any one of the preceding claims and a third aerodynamics system (200C) according to any one of the preceding claims, wherein:
the first aerodynamics system (200A) is configured to be mounted along a right-hand side edge, as seen in the direction of travel, of the rear side (104D) of the vehicle (100);
the second aerodynamics system (200B) is configured to be mounted along a left-hand side edge, as seen in the direction of travel, of the rear side (104D);
the third aerodynamics system (200C) is configured to be mounted along an upper edge of the rear side (104D);
upper edges of the flow flaps (204A, 204B) of the first and the second aerodynamics system (200A, 200B) each run at an angle to the upper edge of the rear side (104D) and side edges of the flow flap (204C) of the third aerodynamics system (200C) each run at an angle to the corresponding side edge of the rear side (104D), so that the flow flap (204C) of the third aerodynamics system (200C) does not overlap with the flow flaps (204A, 204B) of the first and the second aerodynamics system (200A, 200B) in the folded state.

12. A method (500) for reducing aerodynamic drag for a vehicle (100) by means of an aerodynamics system (200) according to any one of the preceding claims, the method (500) comprising:
unfolding the flow flap (204) from the folded position into the unfolded position; and
rotating the deflection element (202) about the axis of rotation by at least one complete revolution while the flow flap (204) is in the unfolded position.

13. The method (500) according to claim 12, wherein:
the flow flap (204) is unfolded from the folded position into the unfolded position when a speed of the vehicle (100) exceeds a first threshold value, and the rotation of the deflection element (202) is driven when the speed exceeds a second threshold value; and/or
the method (500) further comprises adjusting an angular velocity (ω) of the deflection element (202), the penetration depth (Δ) of the deflection element (202) into the flow area (108A-C), and/or the angle of attack (α) of the flow guiding surface (204d) in the unfolded position depending on the speed of the vehicle (100).

14. The method (500) according to claim 12 or 13, further comprising:
folding the flow flap (204) from the unfolded position into the folded position and/or slowing down or stopping the rotation of the deflection element (202) when a braking deceleration of the vehicle (100) exceeds a predetermined threshold value; and/or
adjusting the angle of attack (α) of the flow guiding surface (204d) in the unfolded position, the angular velocity (ω) of the deflection element (202), and/or the penetration depth (Δ) of the deflection element (202) to an incident flow direction of an air flow.

15. The aerodynamics system (200) according to any one of claims 1 to 11, further comprising a control unit (302), wherein the control unit (302) is configured to carry out the method (500) according to any one of claims 12 to 14, wherein the control unit (302) preferably comprises a communication module which is configured to exchange data with a control device of the vehicle (100) by means of a wired and/or wireless communication interface.

## Revendications

1. Système aérodynamique (200) pour un véhicule (100), plus particulièrement un camion, comprenant :
un élément déflecteur (202) qui s'étend le long d'un axe de rotation et qui peut tourner d'au moins 360° autour de l'axe de rotation ; et
un clapet d'écoulement (204) qui peut être mis d'une position repliée vers une position dépliée,
dans lequel :
l'élément déflecteur (202) est conçu pour être monté à l'arrière (104D) du véhicule (100) de sorte que l'axe de rotation s'étend parallèlement à une arête de l'arrière (104D) et l'élément déflecteur (202) est conçu pour tourner autour de l'axe de rotation tandis que le clapet d'écoulement (204) est dans la position dépliée ; et
le clapet d'écoulement (204) est conçu pour être monté à l'arrière (104D) du véhicule (100) de sorte que, dans la position dépliée, une surface de guidage d'écoulement (204d) du clapet d'écoulement (204), orientée vers une zone d'écoulement (108A-C), est disposée, dans la direction de la marche, derrière l'élément déflecteur (202) et s'étend de l'élément déflecteur (202) vers une zone ombragée (110) se trouvant,d ans la direction de la marche, derrière l'arrière (104D).

2. Système aérodynamique (200) selon la revendication 1, dans lequel l'élément déflecteur (202) est conçu pour être monté à l'arrière (104D) du véhicule (100) de sorte que l'élément déflecteur (202) dépasse partiellement au-delà d'une surface latérale (104A-C) du véhicule (100), adjacente à l'arête à l'arrière (104D), dans la zone d'écoulement (108A-C), dans lequel une profondeur de pénétration (Δ) de l'élément déflecteur (202) dans la zone d'écoulement (108A-C) représente de préférence entre 10 % et 50 % d'un diamètre (d) de l'élément déflecteur (202) perpendiculairement à l'axe de rotation et/ou dans lequel l'élément déflecteur (202) est de préférence conçu pour être décalé perpendiculairement à l'axe de rotation, afin d'adapter la profondeur de pénétration (Δ) de l'élément déflecteur (202) dans la zone d'écoulement (108A-C).

3. Système aérodynamique (200) selon la revendication 1 ou 2, dans lequel le clapet d'écoulement (204) peut être pivoté autour d'un axe de pivotement de la position replié vers la position dépliée, dans lequel l'axe de pivotement correspond de préférence à l'axe de rotation et/ou dans lequel le clapet d'écoulement (204) est disposé, dans la position repliée, parallèlement à l'arrière (104D) du véhicule (100).

4. Système aérodynamique (200) selon l'une des revendications précédentes, dans lequel la surface de guidage d'écoulement (204d), dans la position dépliée, est adjacente tangentiellement à une circonférence externe de l'élément déflecteur (202) et/ou dans lequel la surface de guidage d'écoulement (204d) s'étend, dans la position dépliée, avec un angle d'attaque (α) entre 20° et 60°, de préférence entre 30° et 50° par rapport à l'arrière (104A).

5. Système aérodynamique (410) selon l'une des revendications précédentes, dans lequel :
la surface de guidage d'écoulement (204d) comprend une première portion (204d-I) et une deuxième portion (204d-II), dans lequel la première portion (204d-I) est disposée, dans l'état déplié, entre la deuxième portion (204d-II) et l'élément déflecteur (202), la première portion (204d-I) présente une courbure convexe et la deuxième portion (204d-II) ne présente aucune courbure ou présente une courbure concave ; et/ou
le clapet d'écoulement (204) comprend un premier segment (204-I) et un deuxième segment (204-II), dans lequel le premier segment (204-I) est disposé entre le deuxième segment (204-II) et l'élément déflecteur (202), le premier segment (204-I) peut pivoter par rapport à l'élément déflecteur (202) et le deuxième segment (204-II) peut pivoter par rapport au premier segment (204-I).

6. Système aérodynamique (400) selon l'une des revendications précédentes, comprenant en outre un actionneur de réglage (402) qui est conçu pour être fixé à une face arrière (204e) du clapet d'écoulement (204), opposée à la surface de guidage d'écoulement (204d) et à l'arrière (104D) du véhicule (100) et pour faire passer le clapet d'écoulement (204) de la position repliée à la position dépliée.

7. Système aérodynamique (700) selon l'une des revendications précédentes, dans lequel l'élément déflecteur (202) comprend une pluralité de segments (202-I, 202-II, 202-III) disposés le long de l'axe de rotation, qui sont chacun conçus pour être mis en rotation autour de l'axe de rotation indépendamment des autres segments de l'élément déflecteur (202).

8. Système aérodynamique (700) selon l'une des revendications précédentes, dans lequel le système aérodynamique (700) est un système aérodynamique pouvant être installé ultérieurement qui est conçu pour être fixé de manière amovible de l'extérieur sur le véhicule (100).

9. Système aérodynamique (700) selon la revendication 8, dans lequel le système aérodynamique (700) comprend :
un système de fixation (702) qui est conçu pour être accroché dans un logement de charnière du véhicule (100) afin de monter l'élément déflecteur (202) et le clapet d'écoulement (204) à l'arrière (104D) ; et/ou
une charnière (704, 706) qui est conçue pour fixer une porte arrière (104D-I, 104DII) du véhicule (100) de manière pivotante à l'arrière (104D) et/ou sur une surface latérale (104A-C) du véhicule (100), dans lequel un axe de pivotement (708) de la charnière (704n 706) est disposée, dans la direction de la marche, derrière l'élément déflecteur (202) et/ou derrière le clapet d'écoulement (204), dans la position repliée.

10. Système aérodynamique (200) selon la revendication 8 ou 9, comprenant en outre :
un actionneur rotatif (206A-C) qui est conçu pour faire tourner l'élément déflecteur (202) autour de l'axe de rotation ; et
un actionneur de réglage (402) qui est conçu pour faire passer le clapet d'écoulement (204) de la position repliée à la position dépliée,
dans lequel l'actionneur rotatif et l'actionneur de réglage (402) sont conçus pour être couplés à un réseau électrique embarqué et/ou à un système hydraulique dans le véhicule (100).

11. Disposition (300) destinée à être utilisée sur un véhicule (100), plus particulièrement un camion, comprenant un premier système aérodynamique (200A) selon l'une des revendications précédentes, un deuxième système aérodynamique (200B) selon l'une des revendications précédentes et un troisième système aérodynamique (200C) selon l'une des revendications précédentes, dans lequel :
le premier système aérodynamique (200A) est conçu pour être monté le long d'une arête latérale droite, vue dans la direction de la marche, de l'arrière (104D) du véhicule (100) ;
le deuxième système aérodynamique (200B) est conçu pour être monté le long d'une arête latérale gauche, vue dans la direction de la marche, de l'arrière (104D) ;
le troisième système aérodynamique (200C) est conçu pour être monté le long d'une arête supérieure de l'arrière (104D) ;
les arêtes supérieures des clapets d'écoulement (204A, 204B) des premier et deuxième systèmes aérodynamiques (200A, 200B) s'étendent respectivement avec un angle par rapport à l'arête supérieure de l'arrière (104D) et les arêtes latérales du clapet d'écoulement (204C) du troisième système aérodynamique (200C) s'étendent respectivement avec angle par rapport à l'arête latérale correspondante de l'arrière (104D), de sorte que le clapet d'écoulement (204C) du troisième système aérodynamique (200C) se superpose, dans l'état replié, avec les clapets d'écoulement (204A, 204B) des premier et deuxième systèmes aérodynamiques (200A, 200B).

12. Procédé (500) de réduction de la résistance de l'air pour un véhicule (100) au moyen d'un système aérodynamique (200) selon l'une des revendications précédentes, ce procédé (500) comprenant :
le dépliage du clapet d'écoulement (204) de la position repliée à la position dépliée ; et
la rotation de l'élément déflecteur (202) autour de l'axe de rotation d'au moins un tour complet tandis que le clapet d'écoulement (204) est dans la position dépliée.

13. Procédé (500) selon la revendication 12, dans lequel :
le clapet d'écoulement (204) est déplié de la position repliée vers la position dépliée, lorsqu'une vitesse du véhicule (100) dépasse une première valeur seuil et la rotation de l'élément déflecteur (202) est entraîné lorsque la vitesse dépasse une deuxième valeur seuil ; et/ou
le procédé (500) comprend en outre l'adaptation d'une vitesse angulaire (ω) de l'élément déflecteur (202), de la profondeur de pénétration (Δ) de l'élément déflecteur (202) dans la zone d'écoulement (108A-C) et/ou de l'angle d'attaque (α) de la surface de guidage d'écoulement (204d) dans la position dépliée en fonction de la vitesse du véhicule (100).

14. Procédé (500) selon la revendication 12 ou 13, comprenant en outre :
le repliage du clapet d'écoulement (204) de la position dépliée à la position repliée et/ou le freinage ou l'arrêt de la rotation de l'élément déflecteur (202) dès qu'une décélération du véhicule (100) dépasse une valeur seuil prédéterminée ; et/ou
l'adaptation de l'angle d'attaque (α) de la surface de guidage d'écoulement (204d) dans la position dépliée, de la vitesse angulaire (ω) de l'élément déflecteur (202) et/ou de la profondeur de pénétration (Δ) de l'élément déflecteur (202) à une direction d'écoulement d'un écoulement d'air.

15. Système aérodynamique (200) selon l'une des revendications 1 à 11, comprenant en outre une unité de commande (302), dans lequel l'unité de commande (302) est conçue pour exécuter le procédé (500) selon l'une des revendications 12 à 14, dans lequel l'unité de commande (302) comprend de préférence un module de communication qui est conçu pour échanger, au moyen d'une interface de communication filaire et/ou sans fil, des données avec un appareil de commande du véhicule (100).
